# EUROPEAN PATENT APPLICATION

(11) **EP 4 535 915 A1**
(43) Date of publication of application: **09.04.2025**
(21) Application number: 23834644.9
(22) Date of filing: 26.06.2023
(51) Int. Cl.: H04W 74/08

(54) **METHOD AND APPARATUS USED IN COMMUNICATION NODE FOR WIRELESS COMMUNICATION**

(30) Priority: 05.07.2022 CN 202210789756
(71) Applicant: Shanghai Tuiluo Communication Technology Partnership (Limited Partnership), Shanghai 201203 (CN)
(72) Inventor: YU, Qiaoling, Shanghai 201206 (CN); ZHANG, Xiaobo, Shanghai 201206 (CN)
(74) Representative: Zhang, Fan
(86) International application number: PCT/CN2023/102259
(87) International publication number: WO 2024/007870

(57) **Abstract**

Disclosed in the present application are a method and apparatus used in a communication node for wireless communication. The method comprises: a communication node receiving an absolute timing advance command MAC CE during a first random access process; and as a response to the reception of the absolute timing advance command MAC CE, determining, according to whether at least a first inactive process is being executed, whether to start or restart a first timer or a second timer, wherein the action of determining, according to whether at least a first inactive process is being executed, whether to start or restart the first timer or the second timer comprises: if the first inactive process is being executed, starting or restarting the first timer, and if the first inactive process is not being executed, starting or restarting the second timer, both the first timer and the second timer being used for maintaining uplink time alignment, and the first timer being different from the second timer.

## Description

### TECHNICAL FIELD

The present application relates to transmission methods and devices in wireless communication systems, and in particular to a transmission method and device in RRC_INACTIVE state.

### BACKGROUND

New Radio (NR) supports Radio Resource Control (RRC)_INACTIVE state, and until 3rd Generation Partnership Project (3GPP) Rel-16 version, transmitting or receiving data in RRC_INACTIVE state is not supported. Rel-17 has carried out a Work Item (WI) of "Small Data Transmission (SDT) in NR_INACTIVE state", and developed corresponding technical specifications for MO (UL (Uplink))-SDT, allowing small packet transmission for UL-oriented packets in RRC_INACTIVE state.

### SUMMARY

A UE (User Equipment) can trigger a random access procedure during CG (Configure Grant)-SDT procedure, when the UE initiates the random access procedure, and if it receives a Timing Advance Command (TAC) in an RAR (Random Access Response) or MSGB (Message B), it starts or restarts a timeAlignmentTimer corresponding to the TAC. When the Contention Resolution of the random access procedure is considered successful, it stops the timeAlignmentTimer and starts or restarts the cg-SDT-TimeAlignmentTimer. When the UE receives a TAC in an Absolute TAC MAC (Medium Access Control) CE (Control Element) during the random access procedure, it starts or restarts the timeAlignmentTimer corresponding to the TAC. If the Absolute Timing Advance Command MAC CE is received while the CG-SDT procedure is ongoing, continuing the timeAlignmentTimer will have an impact on the uplink transmission timing. Therefore, the maintenance mechanism for uplink transmission timing after the Absolute Timing Advance Command MAC CE is received needs to be enhanced.

In response to the above issues, this application provides a solution for maintaining uplink transmission timing. It should be noted that though the present application only took NR system for example in the statement above; the present application is also applicable to scenarios such as LTE system; further, although the present application provides a specific implementation for MO-SDT in RRC (Radio Resource Control)_INACTIVE state, however, the present application can also be used in scenarios such as MT-SDT (Small Packet Transmission) in RRC_INACTIVE state to achieve technical effects similar to MO-SDT in RRC_INACTIVE state. Though originally targeted at Uu air interface, the present application is also applicable to PC5 interface. Besides, the present application is not only targeted at scenarios of terminals and base stations, but also at Vehicle-to-Everything (V2X) scenarios, terminals and relays as well as communication scenarios between relays and base stations, where similar technical effect can be achieved. Furthermore, although the original intention of the present application is for terminal and base station scenarios, the present application is also applicable to communication scenarios of Integrated Access and Backhaul (IAB), where similar technical effects can be achieved. Furthermore, although the original intention of the present application is for terrestrial network scenarios, it is also applicable to non-terrestrial network (NTN) communication scenarios, where similar technical effects can be achieved. Additionally, the adoption of a unified solution for various scenarios contributes to the reduction of hardware complexity and costs.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

It should be noted that if no conflict is incurred, embodiments in any node in the present application and the characteristics of the embodiments are also applicable to any other node, and vice versa. And the embodiments in the present application and the characteristics in the embodiments can be arbitrarily combined if there is no conflict.

The present application provides a method in a first node for wireless communications, comprising:
receiving an Absolute Timing Advance Command MAC CE in a first random access procedure; as a response to the Absolute Timing Advance Command MAC CE being received, determining starting or restarting a first timer or a second timer according to whether at least a first inactive procedure is ongoing;
herein, the behavior of determining starting or restarting a first timer or second timer according to at least whether a first inactive procedure is ongoing includes: if the first inactive procedure is ongoing, starting or restarting the first timer; if the first inactive procedure is not ongoing, starting or restarting the second timer; both the first timer and the second timer are used to maintain uplink time alignment; the first timer and the second timer are different.

In one embodiment, if the first inactive procedure is ongoing, start or restart the first timer, and the second timer is not started and not restarted; if the first inactive procedure is not ongoing, start or restart the second timer, and the first timer is not started and not restarted.

In one embodiment, a problem to be solved in the present application comprises: how to request uplink resources if there are no suitable CG resources during the CG-SDT procedure.

In one embodiment, a problem to be solved in the present application comprises: how to resume an uplink transmission timing during the CG-SDT procedure.

In one embodiment, a problem to be solved in the present application comprises: how to maintain uplink transmission timing when performing a 2-step random access procedure.

In one embodiment, a problem to be solved in the present application comprises: how to maintain the uplink transmission timing if a 2-step random access procedure is performed during the CG-SDT procedure.

In one embodiment, characteristics of the above method comprise: as a response to the Absolute Timing Advance Command MAC CE being received, starting or restarting a first timer or a second timer is related to whether at least a first inactive procedure is ongoing.

In one embodiment, characteristics of the above method comprise: as a response to the Absolute Timing Advance Command MAC CE being received, at least a first inactive procedure is ongoing is used to determine starting or restarting a first timer or a second timer.

In one embodiment, characteristics of the above method comprise: in the CG-SDT procedure, it is possible to request uplink resources through a 2-step random access procedure.

In one embodiment, characteristics of the above method comprise: in the CG-SDT procedure, the uplink transmission timing can be resumed through a 2-step random access procedure.

In one embodiment, characteristics of the above method comprise: during the CG-SDT procedure, try to maintain cg-SDT-TimeAlignmentTimer as much as possible.

In one embodiment, advantages of the above method comprise: acquiring uplink resources as soon as possible during the CG-SDT procedure.

In one embodiment, advantages of the above method comprise: in the CG-SDT procedure, resuming the uplink transmission timing as soon as possible.

In one embodiment, advantages of the above method comprise: in the CG-SDT procedure, avoiding triggering the random access procedure due to the expiration of timeAlignmentTimer.

According to one aspect of the present application, comprising:
receiving a first signaling and a first MAC PDU (Protocol Data Unit) in the first random access procedure, the first signaling indicating scheduling information of a Physical Downlink Shared Channel (PDSCH), the PDSCH being used to bear the first MAC PDU, the first MAC PDU comprising at least the Absolute Timing Advance Command MAC CE;
herein, the first signaling is scrambled by a first RNTI (Radio Network Temporary Identifier), and the first RNTI is used to identify the first node.

According to one aspect of the present application, comprising:
transmitting a first random access preamble and a second MAC PDU in the first random access procedure, the second MAC PDU comprising at least a first C (Cell)-RNTI MAC CE, and the first C-RNTI MAC CE comprising the first RNTI;
herein, PUSCH resources associated with the first random access preamble are used to bear the second MAC PDU.

According to one aspect of the present application, comprising:
receiving a first message, the first message comprising a first configuration uplink grant and a maximum value of the first timer; as a response to the first message being received, starting the first timer; in RRC_INACTIVE state, as a response to a first condition set being satisfied, initiating the first inactive procedure; in the first inactive procedure, transmitting a second message, the second message being used to request performing a data transmission in the RRC_INACTIVE state; receiving a target signaling, the target signaling being used to determine that the second message is successfully transmitted;
herein, the first message indicates entering or maintaining the RRC_INACTIVE state; the target signaling is scrambled by the first RNTI; the first condition set includes: the first timer is running; the first random access procedure is initiated after the target signaling; when the Absolute Timing Advance Command MAC CE is received, the first inactive procedure is ongoing.

According to one aspect of the present application, comprising:
receiving a first RAR in a second random access procedure; transmitting a third MAC PDU according to the first RAR, the third MAC PDU comprising at least a second C-RNTI MAC CE, the second C-RNTI MAC CE comprising the first RNTI; as a response to the third MAC PDU being transmitted, receiving a second signaling; as a response to the first RAR being received, starting or restarting the second timer; as a response to a contention resolution for the second random access procedure being considered successfully, stopping the second timer, and starting or restarting the first timer;
herein, the second signaling is scrambled by the first RNTI; the second random access procedure is initiated after the target signaling; a contention solution for the second random access procedure is considered successful, the first inactive procedure is ongoing.

According to one aspect of the present application, it is characterized in that the behavior of determining starting or restarting a first timer or second timer according to whether a first inactive procedure is ongoing includes: first starting or restarting the second timer, and then determining whether to stop the second timer and starting or restarting the first timer according to whether the first inactive procedure is ongoing.

In one embodiment, as a response to the Absolute Timing Advance Command MAC CE being received, start or restart the second timer, and whether to stop the second timer and start or restart the first timer according to whether the first inactive procedure is ongoing.

In one embodiment, as a response to the Absolute Timing Advance Command MAC CE being received, start or restart the second timer, and if the first inactive procedure is ongoing, stop the second timer and start or restart the first timer.

The present application provides a method in a second node for wireless communications, comprising:
transmitting an Absolute Timing Advance Command MAC CE in a first random access procedure;
herein, as a response to the Absolute Timing Advance Command MAC CE being received, a receiver of the Absolute Timing Advance Command MAC CE determines starting or restarting a first timer or a second timer according to whether at least a first inactive procedure is ongoing; the behavior of a receiver of the Absolute Timing Advance Command MAC CE determines starting or restarting a first timer or a second timer according to whether at least a first inactive procedure is ongoing includes: if the first inactive procedure is ongoing, a receiver of the Absolute Timing Advance Command MAC CE starts or restarts the first timer; if the first inactive procedure is not ongoing, a receiver of the Absolute Timing Advance Command MAC CE starts or restarts the second timer; both the first timer and the second timer are used to maintain uplink time alignment; the first timer and the second timer are different.

According to one aspect of the present application, comprising:
transmitting a first signaling and a first MAC PDU in the first random access procedure, the first signaling indicating scheduling information of a PDSCH, the PDSCH being used to bear the first MAC PDU, the first MAC PDU comprising at least the Absolute Timing Advance Command MAC CE;
herein, the first signaling is scrambled by a first RNTI, and the first RNTI is used to identify the first node.

According to one aspect of the present application, comprising:
receiving a first random access preamble and a second MAC PDU in the first random access procedure, the second MAC PDU comprising at least a first C-RNTI MAC CE, and the first C-RNTI MAC CE comprising the first RNTI;
herein, PUSCH resources associated with the first random access preamble are used to bear the second MAC PDU.

According to one aspect of the present application, comprising:
transmitting a first message, the first message comprising a first configuration uplink grant and a maximum value of the first timer;
in the first inactive procedure, receiving a second message, the second message being used to request performing a data transmission in the RRC_INACTIVE state; and
transmitting a target signaling, the target signaling being used to determine that the second message is successfully transmitted;
herein, as a response to the first message being received, a receiver of the Absolute Timing Advance Command MAC CE starts the first timer; in RRC_INACTIVE state, as a response to a first condition set being satisfied, a receiver of the Absolute Timing Advance Command MAC CE initiates the first inactive procedure; the first message indicates entering or maintaining the RRC_INACTIVE state; the target signaling is scrambled by the first RNTI; the first condition set includes: the first timer is running; the first random access procedure is initiated after the target signaling; when the Absolute Timing Advance Command MAC CE is received, the first inactive procedure is ongoing.

According to one aspect of the present application, comprising:
transmitting a first RAR in a second random access procedure;
receiving a third MAC PDU, the third MAC PDU comprising at least a second C-RNTI MAC CE, the second C-RNTI MAC CE comprising the first RNTI; and
as a response to the third MAC PDU being received, transmitting a second signaling;
herein, a receiver of the Absolute Timing Advance Command MAC CE transmits the third MAC PDU according to the first RAR; as a response to the first RAR being received, a receiver of the Absolute Timing Advance Command MAC CE starts or restarts the second timer; as a response to a contention resolution for the second random access procedure being considered successfully, a receiver of the Absolute Timing Advance Command MAC CE stops the second timer, and starts or restarts the first timer; the second signaling is scrambled by the first RNTI; the second random access procedure is initiated after the target signaling; a contention solution for the second random access procedure is considered successful, the first inactive procedure is ongoing.

According to one aspect of the present application, it is characterized in that the behavior of a receiver of the Absolute Timing Advance Command MAC CE determining starting or restarting a first timer or second timer according to whether a first inactive procedure is ongoing includes: a receiver of the Absolute Timing Advance Command MAC CE first starts or restarts the second timer, and then determines whether to stop the second timer and start or restart the first timer according to whether the first inactive procedure is ongoing.

The present application provides a first node for wireless communications, comprising:
a first processor, receiving an Absolute Timing Advance Command MAC CE in a first random access procedure; as a response to the Absolute Timing Advance Command MAC CE being received, determining starting or restarting a first timer or a second timer according to whether at least a first inactive procedure is ongoing;
herein, the behavior of determining starting or restarting a first timer or second timer according to at least whether a first inactive procedure is ongoing includes: if the first inactive procedure is ongoing, starting or restarting the first timer; if the first inactive procedure is not ongoing, starting or restarting the second timer; both the first timer and the second timer are used to maintain uplink time alignment; the first timer and the second timer are different.

The present application provides a second node for wireless communications, comprising:
a second transmitter, transmitting an Absolute Timing Advance Command MAC CE in a first random access procedure;
herein, as a response to the Absolute Timing Advance Command MAC CE being received, a receiver of the Absolute Timing Advance Command MAC CE determines starting or restarting a first timer or a second timer according to whether at least a first inactive procedure is ongoing; the behavior of a receiver of the Absolute Timing Advance Command MAC CE determines starting or restarting a first timer or a second timer according to whether at least a first inactive procedure is ongoing includes: if the first inactive procedure is ongoing, a receiver of the Absolute Timing Advance Command MAC CE starts or restarts the first timer; if the first inactive procedure is not ongoing, a receiver of the Absolute Timing Advance Command MAC CE starts or restarts the second timer; both the first timer and the second timer are used to maintain uplink time alignment; the first timer and the second timer are different.

In one embodiment, the present application has the following advantages over conventional schemes:
- . in the CG-SDT procedure, acquiring uplink resources as soon as possible;
- . in the CG-SDT procedure, resuming the uplink transmission timing as soon as possible;
- . in the CG-SDT procedure, avoiding triggering the random access procedure due to the expiration of timeAlignmentTimer.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of a transmission of an Absolute Timing Advance Command MAC CE according to one embodiment of the present application;
FIG. 2 illustrates a schematic diagram of a network architecture according to one embodiment of the present application;
FIG. 3 illustrates a schematic diagram of a radio protocol architecture of a user plane and a control plane according to one embodiment of the present application;
FIG. 4 illustrates a schematic diagram of a first communication device and a second communication device according to one embodiment of the present application;
FIG. 5 illustrates a flowchart of radio signal transmission according to one embodiment of the present application;
FIG. 6 illustrates a flowchart of radio signal transmission according to another embodiment of the present application;
FIG. 7 illustrates a flowchart of radio signal transmission according to another embodiment of the present application;
FIG. 8 illustrates a flowchart of a radio signal transmission for determining starting or restarting a first timer or a second timer according to whether at least a first inactive procedure is ongoing according to one embodiment of the present application;
FIG. 9 illustrates a flowchart of a radio signal transmission for determining starting or restarting a first timer or a second timer according to whether at least a first inactive procedure is ongoing according to another embodiment of the present application;
FIG. 10 illustrates a structure block diagram of a processor in a first node according to one embodiment of the present application;
FIG. 11 illustrates a structure block diagram of a processor in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

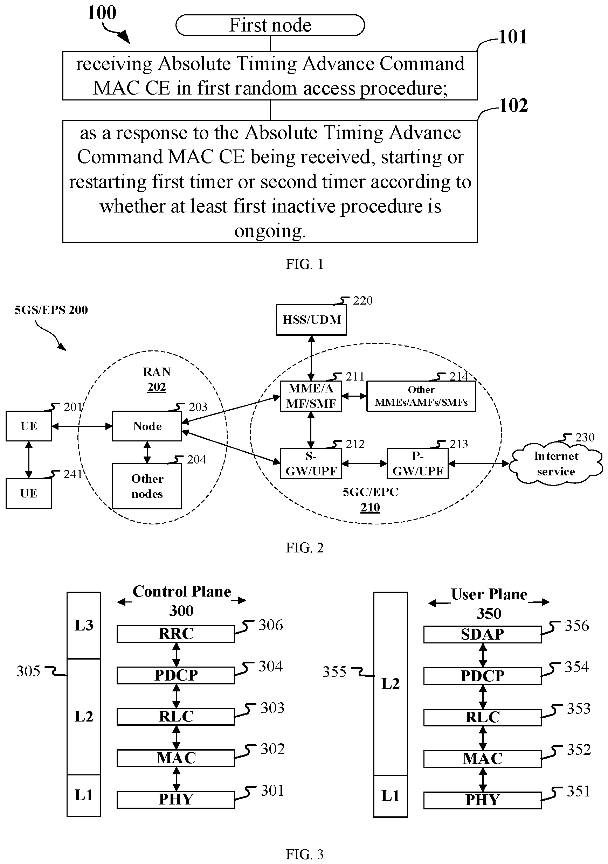

Embodiment 1 illustrates a flowchart of a transmission of an Absolute Timing Advance Command MAC CE according to one embodiment of the present application, as shown in FIG. 1. In FIG. 1, each box represents a step, it should be particularly noted that the sequence order of each box herein does not imply a chronological order of steps marked respectively by these boxes.

In embodiment 1, a first node in the present application receives an Absolute Timing Advance Command MAC CE in the first random access procedure in step 101; in step 102, as a response to the Absolute Timing Advance Command MAC CE being received, determines starting or restarting a first timer or a second timer according to whether at least a first inactive procedure is ongoing; herein, the behavior of determining starting or restarting a first timer or second timer according to whether a first inactive procedure is ongoing includes: if the first inactive procedure is ongoing, starting or restarting the first timer; if the first inactive procedure is not ongoing, starting or restarting the second timer; both the first timer and the second timer are used to maintain uplink time alignment; the first timer and the second timer are different.

In one embodiment, when the Absolute Timing Advance Command MAC CE is received, the second timer is not running.

In one embodiment, when the Absolute Timing Advance Command MAC CE is received, the first timer is running.

In one embodiment, when the Absolute Timing Advance Command MAC CE is received, the first timer is not running.

In one embodiment, when the first random access procedure is initiated, the second timer is running.

In one embodiment, when the first random access procedure is initiated, the second timer is not running.

In one embodiment, when the first random access procedure is initiated, the first timer is running.

In one embodiment, when the first random access procedure is initiated, the first timer is not running.

In one embodiment, the first random access procedure is a Contention Based Random Access (CBRA) procedure.

In one embodiment, the first random access procedure is a random access procedure.

In one embodiment, a random access type of the first random access procedure is a 2-step RA type.

In one embodiment, the first random access procedure is a 2-step random access procedure.

In one embodiment, when the first random access procedure is initialized, set RA_TYPE to 2-stepRA.

In one embodiment, the Absolute Timing Advance Command MAC CE is received in the first random access procedure.

In one embodiment, the Absolute Timing Advance Command MAC CE belongs to the first random access procedure.

In one embodiment, the Absolute Timing Advance Command MAC CE belongs to a MAC subPDU, the MAC subPDU comprises a MAC subheader, and the MAC subheader comprises an eLCID (extended LCID (Logical Channel ID)) field, the eLCID being set to 252.

In one embodiment, a codepoint of an LCID corresponding to the Absolute Timing Advance Command MAC CE is 252.

In one embodiment, an index of an LCID corresponding to the Absolute Timing Advance Command MAC CE is 316.

In one embodiment, for the format of the Absolute Timing Advance Command MAC CE, refer to clause 6.1.3.4a of 3GPP TS38.321.

In one embodiment, the Absolute Timing Advance Command MAC CE comprises a TAC field.

In one subembodiment of the embodiment, the TAC field in the Absolute Timing Advance Command MAC CE comprises a TAC.

In one subembodiment of the embodiment, the TAC field in the Absolute Timing Advance Command MAC CE indicates an initial TA for a timing adjustment amount.

In one subembodiment of the embodiment, the TAC field in the Absolute Timing Advance Command MAC CE comprises 12 bits.

In one subembodiment of the embodiment, the TAC field in the Absolute Timing Advance Command MAC CE indicates index value TA (0, 1, 2... 3846) of a timing adjustment amount.

In one subembodiment of the embodiment, a value of the TAC field in the Absolute Timing Advance Command MAC CE is an integer not less than 0 and not greater than 3846.

In one subembodiment of the embodiment, the Absolute Timing Advance Command MAC CE consists of a TAC field and an R Field.

In one embodiment, the "as a response to the Absolute Timing Advance Command MAC CE being received" includes: after the Absolute Timing Advance Command MAC CE is received.

In one embodiment, the "as a response to the Absolute Timing Advance Command MAC CE being received" includes: if the Absolute Timing Advance Command MAC CE is received.

In one embodiment, the "as a response to the Absolute Timing Advance Command MAC CE being received" includes: once the Absolute Timing Advance Command MAC CE is received.

In one embodiment, the "determining starting or restarting a first timer or a second timer according to whether a first inactive procedure is ongoing" is triggered by the Absolute Timing Advance Command MAC CE being received.

In one embodiment, as a response to the Absolute Timing Advance Command MAC CE being received, process a TAC in the Absolute Timing Advance Command MAC CE; the "processing a TAC in the Absolute Timing Advance Command MAC CE" includes: determining starting or restarting the first timer or the second timer according to whether the first inactive procedure is ongoing.

In one embodiment, the "processing a TAC in the Absolute Timing Advance Command MAC CE" includes: applying a TAC in the Absolute Timing Advance Command MAC CE and determining starting or restarting the first timer or the second timer according to whether the first inactive procedure is ongoing.

In one embodiment, according to clause 4.2 of 3GPP TS 38.213, apply a TAC in the Absolute Timing Advance Command MAC CE.

In one embodiment, the first inactive procedure comprises performing a data transmission through a first radio bearer set in RRC_INACTIVE state.

In one embodiment, the first inactive procedure comprises transmitting unicast data or a unicast signaling through the first radio bearer set in RRC_INACTIVE state.

In one embodiment, the first inactive procedure is a CG-SDT procedure.

In one embodiment, the first inactive procedure comprises monitoring a PDCCH scrambled by the first RNTI and a CS (configured scheduling)-RNTI in the RRC_INACTIVE state.

In one embodiment, for the CG-SDT procedure, refer to 3GPP TS 38.321.

In one embodiment, for the CG-SDT procedure, refer to clause 5.8 and 5.27 in 3GPP TS 38.321.

In one embodiment, the first radio bearer set comprises at least one radio bearer.

In one embodiment, the first radio bearer set comprises at least one of SRB2 (Signaling Radio Bearer 2) or DRB ((user) Data Radio Bearer).

In one embodiment, the first radio bearer set only comprises SRB2.

In one embodiment, the first radio bearer set only comprises at least one DRB.

In one embodiment, the first radio bearer set comprises SRB2 and at least one DRB.

In one embodiment, the "determining starting or restarting a first timer or second timer according to whether a first inactive procedure is ongoing" includes: determining starting or restarting the first timer or the second timer only according to whether the first inactive procedure is ongoing.

In one embodiment, the "determining starting or restarting a first timer or second timer according to whether at least a first inactive procedure is ongoing" includes: determining starting or restarting the first timer or the second timer according to whether the first inactive procedure is being executing and a cell to which CG resources associated with the first inactive procedure belong.

In one embodiment, the "if the first inactive procedure is ongoing, starting or restarting the first timer; if the first inactive procedure is not ongoing, starting or restarting the second timer" can be replaced with: if the first inactive procedure is ongoing, starting or restarting the first timer; otherwise, starting or restarting the second timer.

In one embodiment, as a response to the Absolute Timing Advance Command MAC CE being received, and if the first inactive procedure is ongoing, start or restart the first timer; herein, the second timer is not started or restarted.

In one embodiment, as a response to the Absolute Timing Advance Command MAC CE being received, and if the first inactive procedure is not ongoing, start or restart the second timer; herein, the first timer is not started or restarted.

In one embodiment, the first inactive procedure is ongoing includes: the first inactive procedure is initiated, and the first inactive procedure is not terminated.

In one embodiment, the first inactive procedure is ongoing includes: at least the first inactive procedure is initiated.

In one embodiment, the first inactive procedure is ongoing includes: timer T319a is running.

In one embodiment, the first inactive procedure is ongoing includes: the first inactive procedure is initiated, link failure does not occur in the first node, and the first node does not receive any RRC message.

In one embodiment, the first inactive procedure is ongoing includes: the first inactive procedure is initiated, and link failure does not occur in the first node, and the first node does not receive any of an RRCRelease message, an RRCResume message, an RRCReject message, or an RRCSetup message.

In one embodiment, the first inactive procedure is ongoing includes: the first inactive procedure is initiated, and the first node monitors a PDCCH for a C-RNTI and a CS-RNTI in the RRC_INACTIVE state.

In one embodiment, the first inactive procedure is ongoing includes: the CG-SDT procedure is ongoing.

In one embodiment, the first inactive procedure is not ongoing includes: the first timer is not configured.

In one embodiment, the first inactive procedure is not ongoing includes: the first random access procedure is initiated in RRC_CONNECTED state.

In one embodiment, the first inactive procedure is not ongoing includes: the first random access procedure is initiated in RRC_INACTIVE state, and the first condition set is not satisfied.

In one embodiment, the first inactive procedure is not ongoing includes: T319a is not running.

In one embodiment, the first inactive procedure is not ongoing includes: the first inactive procedure is not initiated.

In one embodiment, the "starting or restarting the first timer" includes: starting the first timer.

In one embodiment, the "starting or restarting the first timer" includes: restarting the first timer.

In one embodiment, the "starting or restarting the first timer" includes: if the first timer is not running, starting the first timer.

In one embodiment, the "starting or restarting the first timer" includes: if the first timer is running, restarting the first timer.

In one embodiment, the "starting or restarting the second timer" includes: starting the second timer.

In one embodiment, the "starting or restarting the second timer" includes: restarting the second timer.

In one embodiment, the "starting or restarting the second timer" includes: if the second timer is not running, starting the second timer.

In one embodiment, the "starting or restarting the second timer" includes: if the second timer is running, restarting the second timer.

In one embodiment, the first timer and the second timer are both timers used for uplink timing alignment.

In one embodiment, the first timer is a cg-SDT-timeAlignmentTimer.

In one embodiment, the first timer is used to determine how long a MAC entity considers CG-SDT to be uplink time aligned.

In one embodiment, the first timer is associated with a first TAG (Timing Advance Group).

In one embodiment, the second timer is a TimeAlignmentTimer.

In one embodiment, the second timer is used to determine how long a MAC entity considers all serving cells in a first TAG to be uplink time aligned.

In one embodiment, the second timer is associated with a first TAG.

In one embodiment, the first TAG is a PTAG (Primary TAG).

In one embodiment, an index of the first TAG is equal to 0.

In one embodiment, the first timer and the second timer are associated with a same TAG.

In one embodiment, the first timer and the second timer are associated with different TAGs.

In one embodiment, the first timer is not the second timer.

In one embodiment, the first timer and the second timer are two different timers.

In one embodiment, a name of the first timer is different from a name of the second timer.

In one embodiment, the meaning of the initiating includes starting executing.

In one embodiment, the meaning of the initiating includes initiate.

In one embodiment, the starting refers to start.

In one embodiment, the restarting refers to restart.

In one embodiment, the "starting a first timer" refers to: enable the first timer to start timing.

In one embodiment, the "starting a first timer" refers to: enable the first timer to start running.

In one embodiment, the "starting a first timer" refers to: enable the first timer to start counting forward.

In one embodiment, the "starting a first timer" refers to: enable the first timer to start counting down.

In one embodiment, the "starting a first timer" refers to: enable the first timer to start counting forward from 0.

In one embodiment, the "starting a first timer" refers to: enable the first timer to start counting down from 0.

In one embodiment, the "restarting a first timer" refers to: enable the first timer to restart timing.

In one embodiment, the "restarting a first timer" refers to: enable the first timer to restart running.

In one embodiment, the "restarting a first timer" refers to: enable the first timer to restart counting forward.

In one embodiment, the "restarting a first timer" refers to: enable the first timer to restart counting down.

In one embodiment, the "restarting a first timer" refers to: enable the first timer to restart counting forward from 0.

In one embodiment, the "restarting a first timer" refers to: enable the first timer to restart counting down from a maximum value of the first timer.

In one embodiment, the first timer being expired includes: the first timer is equal to 0; the first timer counts down.

In one embodiment, the first timer being expired includes: the first timer is equal to a maximum value of the first timer; the first timer counts forward.

In one embodiment, the first timer being expired includes: the first timer is considered to be expired.

In one embodiment, the "starting a second timer" refers to: enable the second timer to start counting.

In one embodiment, the "starting a second timer" refers to: enable the second timer to start running.

In one embodiment, the "starting a second timer" refers to: enable the second timer to start counting forward.

In one embodiment, the "starting a second timer" refers to: enable the second timer to start counting down.

In one embodiment, the "starting a second timer" refers to: enable the second timer to start counting forward from 0.

In one embodiment, the "starting a second timer" refers to: enable the second timer to start counting down from 0.

In one embodiment, the "restarting a second timer" refers to: enable the second timer to restart counting.

In one embodiment, the "restarting a second timer" refers to: enable the second timer to restart running.

In one embodiment, the "restarting a second timer" refers to: enable the second timer to restart counting forward.

In one embodiment, the "restarting a second timer" refers to: enable the second timer to restart counting down.

In one embodiment, the "restarting a second timer" refers to: enable the second timer to restart counting forward from 0.

In one embodiment, the "restarting a second timer" refers to: enable the second timer to restart counting down from a maximum value of the second timer.

In one embodiment, the second timer being expired includes: the second timer is equal to 0; the second timer counts down.

In one embodiment, the second timer being expired includes: the second timer is equal to a maximum value of the second timer; the second timer counts forward.

In one embodiment, the second timer being expired includes: the second timer is considered to be expired.

### Embodiment 2

Embodiment 2 illustrates a schematic diagram of a network architecture according to one embodiment of the present application, as shown in FIG. 2. FIG. 2 is a diagram illustrating a network architecture 200 of 5G NR/ Long-Term Evolution (LTE)/ Long-Term Evolution Advanced (LTE-A) systems. The 5G NR/ LTE/ LTE-A network architecture 200 may be called a 5G System (5GS)/Evolved Packet System (EPS) 200 or other appropriate terms. The 5GS/EPS 200 comprises at least one of a UE 201, an RAN 202, a 5G Core Network/Evolved Packet Core (5GC/EPC) 210, a Home Subscriber Server (HSS)/ Unified Data Management (UDM) 220 or an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will readily understand that various concepts presented throughout the present application can be extended to networks providing circuit switching services or other cellular networks. The RAN comprises the node 203 and other nodes 204. The node 203 provides UE 201-oriented user plane and control plane protocol terminations. The node 203 may be connected to other nodes 204 via an Xn interface (e. g., backhaul)/X2 interface. The node 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The node 203 provides an access point of the 5GC/EPC 210 for the UE 201. Examples of the UE 201 include cellular phones, smart phones, Session Initiation Protocol (SIP) phones, laptop computers, Personal Digital Assistant (PDA), satellite Radios, non-terrestrial base station communications, Satellite Mobile Communications, Global Positioning Systems (GPS), multimedia devices, video devices, digital audio players (for example, MP3 players), cameras, game consoles, unmanned aerial vehicles (UAV), aircrafts, narrow-band Internet of Things (loT) devices, machine-type communication devices, land vehicles, automobiles, wearable devices, or any other similar functional devices. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The node 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/ AMFs/ SMFs 214, a Service Gateway (S-GW)/ User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212, the S-GW/UPF 212 is connected to the P-GW/UPF 213. The P-GW provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming Services (PSS).

In one embodiment, the UE 201 corresponds to the first node in the present application.

In one embodiment, the UE 201 is a UE (User Equipment).

In one embodiment, the UE 201 is a relay.

In one embodiment, the UE 201 is a base station.

In one embodiment, the node 203 corresponds to the second node in the present application.

In one embodiment, the node 203 is a BaseStation (BS).

In one embodiment, the node 203 is a UE.

In one embodiment, the node 203 is a relay.

In one embodiment, the node 203 is a gateway.

Typically, the UE 201 is a UE and node 203 is a base station.

In one embodiment, the UE supports Non-Terrestrial Network (NTN) transmission.

In one embodiment, the UE supports Terrestrial Network (TN) transmission.

In one embodiment, the UE supports communications within networks with large latency differences.

In one embodiment, the UE supports Dual Connection (DC) transmission.

In one embodiment, the UE comprises an aircraft.

In one embodiment, the UE comprises a vehicle terminal.

In one embodiment, the UE comprises a vessel.

In one embodiment, the UE comprises an Internet of Things (IoT) terminal.

In one embodiment, the UE comprises an industrial Internet of Things (IoT) terminal.

In one embodiment, the UE comprises a device supporting transmission with low-latency and high-reliability.

In one embodiment, the UE comprises test equipment.

In one embodiment, the UE comprises a signaling tester.

In one embodiment, the base station comprises a Base Transceiver Station (BTS).

In one embodiment, the base station comprises NodeB (NB).

In one embodiment, the base station comprises gNB.

In one embodiment, the base station comprises eNB.

In one embodiment, the base station comprises ng-eNB.

In one embodiment, the base station comprises en-gNB.

In one embodiment, the base station supports transmission over a non-terrestrial network.

In one embodiment, the base station supports transmission over networks with large latency differences.

In one embodiment, the base station supports transmission over a terrestrial network.

In one embodiment, the base station comprises a Marco Cellular base station.

In one embodiment, the base station comprises a Micro Cell base station.

In one embodiment, the base station comprises a Pico Cell base station.

In one embodiment, the base station comprises a Femtocell.

In one embodiment, the base station comprises a base station supporting large latency differences.

In one embodiment, the base station comprises flight platform equipment.

In one embodiment, the base station comprises satellite equipment.

In one embodiment, the base station comprises a Transmitter Receiver Point (TRP).

In one embodiment, the base station comprises a Centralized Unit (CU).

In one embodiment, the base station comprises a Distributed Unit (DU).

In one embodiment, the base station comprises test equipment.

In one embodiment, the base station comprises a signaling tester.

In one embodiment, the base station comprises an Integrated Access and Backhaul (IAB)-node.

In one embodiment, the base station comprises an IAB-donor.

In one embodiment, the base station comprises an IAB-donor-CU.

In one embodiment, the base station comprises an IAB-donor-DU.

In one embodiment, the base station comprises an IAB-DU.

In one embodiment, the base station comprises an IAB-MT.

In one embodiment, the relay comprises a relay.

In one embodiment, the relay comprises an L3 relay.

In one embodiment, the relay comprises an L2 relay.

In one embodiment, the relay comprises a router.

In one embodiment, the relay comprises a switch.

In one embodiment, the relay comprises a UE.

In one embodiment, the relay comprises a base station.

### Embodiment 3

Embodiment 3 illustrates a schematic diagram of an example of a radio protocol architecture of a user plane and a control plane according to one embodiment of the present application, as shown in FIG. 3. FIG. 3 is a schematic diagram illustrating an embodiment of a radio protocol architecture of a user plane 350 and a control plane 300. In FIG. 3, the radio protocol architecture for the control plane 300 is represented by three layers, which are a layer 1, a layer 2 and a layer 3, respectively. The layer 1 (L1) is the lowest layer and performs signal processing functions of various PHY layers. The L1 is called PHY 301 in the present application. L2 305, above the PHY 301, comprises a Medium Access Control (MAC) sublayer 302, a Radio Link Control (RLC) sublayer 303 and a Packet Data Convergence Protocol (PDCP) sublayer 304. The PDCP sublayer 304 provides multiplexing among variable radio bearers and logical channels. The PDCP sublayer 304 provides security by encrypting a data packet and provides support for handover. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating various radio resources (i.e., resources block) in a cell. The MAC sublayer 302 is also in charge of HARQ operation. The RRC sublayer 306 in L3 layer of the control plane 300 is responsible for acquiring radio resources (i.e., radio bearer) and configuring the lower layer with an RRC signaling. The radio protocol architecture of the user plane 350 comprises layer 1 (L1) and layer 2 (L2). In the user plane 350, the radio protocol architecture is almost the same as the corresponding layer and sublayer in the control plane 300 for physical layer 351, PDCP sublayer 354, RLC sublayer 353 and MAC sublayer 352 in L2 layer 355, but the PDCP sublayer 354 also provides a header compression for a higher-layer packet so as to reduce a radio transmission overhead. The L2 layer 355 in the user plane 350 also includes Service Data Adaptation Protocol (SDAP) sublayer 356, which is responsible for the mapping between QoS flow and Data Radio Bearer (DRB) to support the diversity of traffic.

In one embodiment, the radio protocol architecture in FIG. 3 is applicable to the first node in the present application.

In one embodiment, the radio protocol architecture in FIG. 3 is applicable to the second node in the present application.

In one embodiment, the Absolute Timing Advance Command MAC CE in the present application is generated by the MAC 302 or MAC 352.

In one embodiment, the first signaling in the present application is generated by the PHY 301 or the PHY 351.

In one embodiment, the first MAC PDU in the present application is generated by the RRC 306.

In one embodiment, the first MAC PDU in the present application is generated by the MAC 302 or the MAC 352.

In one embodiment, the first message in the present application is generated by the RRC 306.

In one embodiment, the first message in the present application is generated by the MAC 302 or the MAC 352.

In one embodiment, the first message in the present application is generated by the PHY 301 or the PHY 351.

In one embodiment, the first RAR in the present application is generated by the MAC 302 or the MAC 352.

In one embodiment, the second signaling in the present application is generated by the PHY 301 or the PHY 351.

In one embodiment, the first random access preamble in the present application is generated by the PHY 301 or the PHY 351.

In one embodiment, the second MAC PDU in the present application is generated by the RRC 306.

In one embodiment, the second MAC PDU in the present application is generated by the MAC 302 or the MAC 352.

In one embodiment, the second message in the present application is generated by the RRC 306.

In one embodiment, the second message in the present application is generated by the MAC 302 or the MAC 352.

In one embodiment, the second message in the present application is generated by the PHY 301 or the PHY 351.

In one embodiment, the target signaling in the present application is generated by the RRC 306.

In one embodiment, the target signaling in the present application is generated by the MAC 302 or the MAC 352.

In one embodiment, the target signaling in the present application is generated by the PHY 301or the PHY 351.

In one embodiment, the third MAC PDU in the present application is generated by the RRC 306.

In one embodiment, the third MAC PDU in the present application is generated by the MAC 302 or the MAC 352.

### Embodiment 4

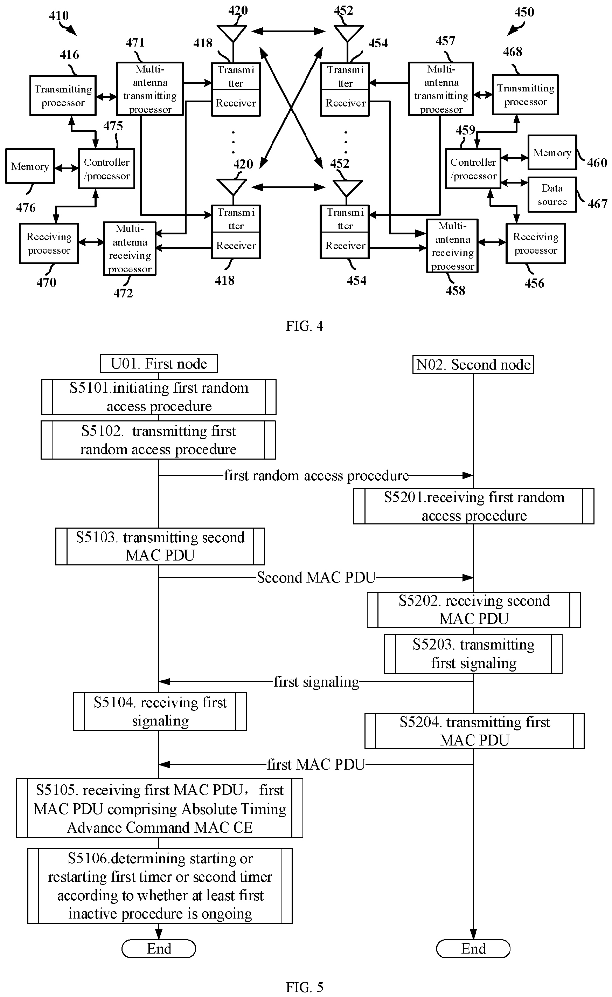

Embodiment 4 illustrates a schematic diagram of a first communication device and a second communication device in the present application, as shown in FIG. 4. FIG. 4 is a block diagram of a first communication device 450 in communication with a second communication device 410 in an access network.

The first communication device 450 comprises a controller/ processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/ processor 475, a memory 476, a receiving processor 470, a transmitting processor 416, a multi-antenna receiving processor 472, a multi-antenna transmitting processor 471, a transmitter/ receiver 418 and an antenna 420.

In a transmission from the second communication device 410 to the first communication device 450, at the first communication device 410, a higher layer packet from the core network is provided to a controller/ processor 475. The controller/processor 475 provides a function of the L2 layer. In the transmission from the second communication device 410 to the first communication device 450, the controller/ processor 475 provides header compression, encryption, packet segmentation and reordering, and multiplexing between a logical channel and a transport channel, and radio resources allocation for the first communication device 450 based on various priorities. The controller/ processor 475 is also responsible for retransmission of a lost packet and a signaling to the first communication device 450. The transmitting processor 416 and the multi-antenna transmitting processor 471 perform various signal processing functions used for the L1 layer (that is, PHY). The transmitting processor 416 performs coding and interleaving so as to ensure an FEC (Forward Error Correction) at the second communication device 410 side, and the mapping to signal clusters corresponding to each modulation scheme (i.e., BPSK, QPSK, M-PSK, M-QAM, etc.). The multi-antenna transmitting processor 471 performs digital spatial precoding, including codebook-based precoding and non-codebook-based precoding, and beamforming on encoded and modulated symbols to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multi-carrier symbol streams. After that the multi-antenna transmitting processor 471 performs transmission analog precoding/beamforming on the time-domain multi-carrier symbol streams. Each transmitter 418 converts a baseband multicarrier symbol stream provided by the multi-antenna transmitting processor 471 into a radio frequency (RF) stream. Each radio frequency stream is later provided to different antennas 420.

In a transmission from the second communication device 410 to the first communication device 450, at the second communication device 450, each receiver 454 receives a signal via a corresponding antenna 452. Each receiver 454 recovers information modulated to the RF carrier, converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs receiving analog precoding/beamforming on a baseband multicarrier symbol stream from the receiver 454. The receiving processor 456 converts the baseband multicarrier symbol stream after receiving the analog precoding/ beamforming from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any the first communication device-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted on the physical channel by the second communication node 410. Next, the higher-layer data and control signal are provided to the controller/processor 459. The controller/processor 459 performs functions of the L2 layer. The controller/processor 459 can be connected to a memory 460 that stores program code and data. The memory 460 can be called a computer readable medium. In the transmission from the second communication device 410 to the second communication device 450, the controller/ processor 459 provides demultiplexing between a transport channel and a logical channel, packet reassembling, decryption, header decompression and control signal processing so as to recover a higher-layer packet from the core network. The higher-layer packet is later provided to all protocol layers above the L2 layer, or various control signals can be provided to the L3 layer for processing.

In a transmission from the first communication device 450 to the second communication device 410, at the second communication device 450, the data source 467 is configured to provide a higher-layer packet to the controller/processor 459. The data source 467 represents all protocol layers above the L2 layer. Similar to a transmitting function of the second communication device 410 described in the transmission from the second communication device 410 to the first communication device 450, the controller/processor 459 performs header compression, encryption, packet segmentation and reordering, and multiplexing between a logical channel and a transport channel based on radio resources allocation so as to provide the L2 layer functions used for the user plane and the control plane. The controller/processor 459 is also responsible for retransmission of a lost packet, and a signaling to the second communication device 410. The transmitting processor 468 performs modulation mapping and channel coding. The multi-antenna transmitting processor 457 implements digital multi-antenna spatial precoding, including codebook-based precoding and non-codebook-based precoding, as well as beamforming. Following that, the generated spatial streams are modulated into multicarrier/single-carrier symbol streams by the transmitting processor 468, and then modulated symbol streams are subjected to analog precoding/beamforming in the multi-antenna transmitting processor 457 and provided from the transmitters 454 to each antenna 452. Each transmitter 454 first converts a baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and multi-antenna receiving processor 472 collectively provide functions of the L1 layer. The controller/processor 475 provides functions of the L2 layer. The controller/processor 475 can be connected with the memory 476 that stores program code and data. The memory 476 can be called a computer readable medium. In the transmission from the first communication device 450 to the second communication device 410, the controller/processor 475 provides de-multiplexing between a transport channel and a logical channel, packet reassembling, decryption, header decompression, control signal processing so as to recover a higher-layer packet from the UE 450. The higher-layer packet coming from the controller/processor 475 may be provided to the core network.

In one embodiment, the first communication device 450 comprises at least one processor and at least one memory. at least one processor and at least one memory. The at least one memory comprises computer program codes; the at least one memory and the computer program codes are configured to be used in collaboration with the at least one processor, the first communication device 450 at least: receives an Absolute Timing Advance Command MAC CE in a first random access procedure; as a response to the Absolute Timing Advance Command MAC CE being received, determines starting or restarting a first timer or a second timer according to whether at least a first inactive procedure is ongoing; herein, the behavior of determining starting or restarting a first timer or second timer according to at least whether a first inactive procedure is ongoing includes: if the first inactive procedure is ongoing, starting or restarting the first timer; if the first inactive procedure is not ongoing, starting or restarting the second timer; both the first timer and the second timer are used to maintain uplink time alignment; the first timer and the second timer are different.

In one embodiment, the first communication device 450 comprises at least one processor and at least one memory. a memory that stores a computer readable instruction program. The computer readable instruction program generates an action when executed by at least one processor. The action includes: receiving an Absolute Timing Advance Command MAC CE in a first random access procedure; as a response to the Absolute Timing Advance Command MAC CE being received, determining starting or restarting a first timer or a second timer according to whether at least a first inactive procedure is ongoing; herein, the behavior of determining starting or restarting a first timer or second timer according to at least whether a first inactive procedure is ongoing includes: if the first inactive procedure is ongoing, starting or restarting the first timer; if the first inactive procedure is not ongoing, starting or restarting the second timer; both the first timer and the second timer are used to maintain uplink time alignment; the first timer and the second timer are different.

In one embodiment, the second communication device 410 comprises at least one processor and at least one memory. The at least one memory comprises computer program codes; the at least one memory and the computer program codes are configured to be used in collaboration with the at least one processor. The second communication device 410 at least: transmits an Absolute Timing Advance Command MAC CE in a first random access procedure; herein, as a response to the Absolute Timing Advance Command MAC CE being received, a receiver of the Absolute Timing Advance Command MAC CE determines starting or restarting a first timer or a second timer according to whether at least a first inactive procedure is ongoing; the behavior of a receiver of the Absolute Timing Advance Command MAC CE determines starting or restarting a first timer or a second timer according to whether at least a first inactive procedure is ongoing includes: if the first inactive procedure is ongoing, a receiver of the Absolute Timing Advance Command MAC CE starts or restarts the first timer; if the first inactive procedure is not ongoing, a receiver of the Absolute Timing Advance Command MAC CE starts or restarts the second timer; both the first timer and the second timer are used to maintain uplink time alignment; the first timer and the second timer are different.

In one embodiment, the second communication device 410 comprises a memory that stores a computer readable instruction program. The computer readable instruction program generates an action when executed by at least one processor. The action includes: transmitting an Absolute Timing Advance Command MAC CE in a first random access procedure; herein, as a response to the Absolute Timing Advance Command MAC CE being received, a receiver of the Absolute Timing Advance Command MAC CE determines starting or restarting a first timer or a second timer according to whether at least a first inactive procedure is ongoing; the behavior of a receiver of the Absolute Timing Advance Command MAC CE determines starting or restarting a first timer or a second timer according to whether at least a first inactive procedure is ongoing includes: if the first inactive procedure is ongoing, a receiver of the Absolute Timing Advance Command MAC CE starts or restarts the first timer; if the first inactive procedure is not ongoing, a receiver of the Absolute Timing Advance Command MAC CE starts or restarts the second timer; both the first timer and the second timer are used to maintain uplink time alignment; the first timer and the second timer are different.

In one embodiment, the antenna 452, the receiver 454, the receiving processor 456, and the controller/processor 459 are used to receive an Absolute Timing Advance Command MAC CE.

In one embodiment, at least one of the antenna 420, the transmitter 418, the transmitting processor 416, or the controller/processor 475 is used to transmit an Absolute Timing Advance Command MAC CE.

In one embodiment, the antenna 452, the receiver 454, the receiving processor 456, the controller/processor 459 are used to receive a first signaling.

In one embodiment, at least one of the antenna 420, the transmitter 418, the transmitting processor 416, or the controller/processor 475 is used to transmit a first signaling.

In one embodiment, the antenna 452, the receiver 454, the receiving processor 456, and the controller/processor 459 are used to receive a first MAC PDU.

In one embodiment, at least one of the antenna 420, the transmitter 418, the transmitting processor 416, or the controller/processor 475 is used to transmit a first MAC PDU.

In one embodiment, the antenna 452, the receiver 454, the receiving processor 456, and the controller/processor 459 are used to receive a first message.

In one embodiment, at least one of the antenna 420, the transmitter 418, the transmitting processor 416, or the controller/processor 475 is used to transmit a first message.

In one embodiment, the antenna 452, the receiver 454, the receiving processor 456, and the controller/processor 459 are used to receive a first RAR.

In one embodiment, at least one of the antenna 420, the transmitter 418, the transmitting processor 416, or the controller/processor 475 is used to transmit a first RAR.

In one embodiment, the antenna 452, the receiver 454, the receiving processor 456, and the controller/processor 459 are used to receive a second signaling.

In one embodiment, at least one of the antenna 420, the transmitter 418, the transmitting processor 416, or the controller/processor 475 is used to transmit a second signaling.

In one embodiment, the antenna 452, the transmitter 454, the transmitting processor 468, and the controller/processor 459 are used to transmit a first random access preamble.

In one embodiment, at least one of the antenna 420, the receiver 418, the receiving processor 470, or the controller/processor 475 is used to receive a first random access preamble.

In one embodiment, the antenna 452, the transmitter 454, the transmitting processor 468, and the controller/processor 459 are used to transmit a second MAC PDU.

In one embodiment, at least one of the antenna 420, the receiver 418, the receiving processor 470, or the controller/processor 475 is used to receive a second MAC PDU.

In one embodiment, the antenna 452, the transmitter 454, the transmitting processor 468, and the controller/processor 459 are used to transmit a second message.

In one embodiment, at least one of the antenna 420, the receiver 418, the receiving processor 470, or the controller/processor 475 is used to receive a second message.

In one embodiment, the antenna 452, the transmitter 454, the transmitting processor 468, and the controller/processor 459 are used to transmit a target signaling.

In one embodiment, at least one of the antenna 420, the receiver 418, the receiving processor 470, or the controller/processor 475 is used to receive a target signaling.

In one embodiment, the antenna 452, the transmitter 454, the transmitting processor 468, and the controller/processor 459 are used to transmit a third MAC PDU.

In one embodiment, at least one of the antenna 420, the receiver 418, the receiving processor 470, or the controller/processor 475 is used to receive a third MAC PDU.

In one embodiment, the first communication device 450 corresponds to a first node in the present application.

In one embodiment, the second communication device 410 corresponds to a second node in the present application.

In one embodiment, the first communication device 450 is a UE.

In one embodiment, the first communication device 450 is a UE that supports large delay differences.

In one embodiment, the first communication device 450 is a UE that supports NTN.

In one embodiment, the first communication device 450 is an aircraft device.

In one embodiment, the first communication device 450 has a positioning capability.

In one embodiment, the first communication device 450 does not have a positioning capability.

In one embodiment, the first communication device 450 is a UE that supports TN.

In one embodiment, the second communication device 410 is a base station (gNB/eNB/ng-eNB).

In one embodiment, the second communication device 410 is a base station that supports large delay differences.

In one embodiment, the second communication device 410 is a base station that supports NTN.

In one embodiment, the second communication device 410 is satellite equipment.

In one embodiment, the second communication device 410 is flying platform equipment.

In one embodiment, the second communication device 410 is a base station that supports TN.

### Embodiment 5

Embodiment 5 illustrates a flowchart of radio signal transmission according to one embodiment in the present application, as shown in FIG. 5. It is particularly underlined that the order illustrated in the embodiment does not put constraints over sequences of signal transmissions and implementations.

**The first node U01**, in step S5101, initiates a first random access procedure; in step S5102, transmits a first random access preamble in the first random access procedure; in step S5103, transmits a second MAC PDU in the first random access procedure; in step S5104, receives a first signaling in the first random access procedure; in step S5105, receives a first MAC PDU during the first random access procedure, and the first MAC PDU comprises at least the Absolute Timing Advance Command MAC CE; in step S5106, as a response to the Absolute Timing Advance Command MAC CE being received, determines starting or restarting a first timer or a second timer according to whether at least a first inactive procedure is ongoing.

**The second node N02**, in step S5201, receives the first random access preamble; in step S5202, receives the second MAC PDU; in step S5203, transmits the first signaling; in step S5204, transmits the first MAC PDU.

In embodiment 5, the behavior of determining starting or restarting a first timer or second timer according to at least whether a first inactive procedure is ongoing includes: if the first inactive procedure is ongoing, starting or restarting the first timer; if the first inactive procedure is not ongoing, starting or restarting the second timer; both the first timer and the second timer are used to maintain uplink time alignment; the first timer and the second timer are different; the first signaling indicates scheduling information of a PDSCH, and the PDSCH is used to bear the first MAC PDU; the first signaling is scrambled by a first RNTI, and the first RNTI is used to identify the first node U01; the second MAC PDU comprises at least a first C-RNTI MAC CE, and the first C-RNTI MAC CE comprises the first RNTI; PUSCH resources associated with the first random access preamble are used to bear the second MAC PDU.

In one embodiment, the first node U01 is a UE.

In one embodiment, the first node U01 is a base station.

In one embodiment, the first node U01 is a relay device.

In one embodiment, the second node N02 is a base station.

In one embodiment, the second node N02 is a UE.

In one embodiment, the second node N02 is a relay device.

In one embodiment, the second node is a maintenance base station of the first cell.

Typically, the first node U01 is a UE, and the second node N02 is a gNB.

In one embodiment, in a running period of msgB-ResponseWindow, monitor a PDCCH scrambled by the first RNTI.

In one embodiment, in a running period of msgB-ResponseWindow, the first signaling is received.

In one embodiment, in a running period of msgB-ResponseWindow, the first signaling and the first MAC PDU are received.

In one embodiment, in the first random access procedure, the first random access preamble being transmitted is used to determine a start of the msgB-ResponseWindow.

In one embodiment, the first cell belongs to an RNA (RAN based Notification Area) maintained by the first node.

In one embodiment, the first message is received on the first cell.

In one embodiment, the first signaling is a DCI (downlink control information), and the DCI is used to schedule a PDSCH.

In one embodiment, the first signaling is a DCI, and a format of the DCI is Format 1_0.

In one embodiment, the first signaling is a DCI, and a format of the DCI is Format 1_1.

In one embodiment, the first signaling is a DCI, and a format of the DCI is Format 1_2.

In one embodiment, the first signaling is a PDCCH transmission.

In one embodiment, the scheduling information of the PDSCH comprises at least one of Time domain resource assignment, Frequency domain resource assignment, Modulation and Coding Scheme (MCS), Hybrid Automatic Repeat Request (HARQ) process number, or Redundancy Version (RV).

In one embodiment, the PDSCH is used to bear at least the first MAC PDU.

In one embodiment, a PDSCH indicated by the first signaling is used to bear the first MAC PDU.

In one embodiment, the first MAC PDU is transmitted on a PDSCH indicated by the first signaling.

In one embodiment, the first MAC PDU is a MAC PDU.

In one embodiment, the first MAC PDU is an MSGB.

In one embodiment, the first MAC PDU belongs to an MSGB.

In one embodiment, the first MAC PDU comprises at least one MAC subPDU.

In one embodiment, the first MAC PDU comprises only one MAC subPDU, the MAC subPDU consists of the Absolute Timing Advance Command MAC CE and a MAC subheader corresponding to the Absolute Timing Advance Command MAC CE.

In one embodiment, the first MAC PDU comprises multiple MAC subPDUs, and one of the multiple MAC subPDUs consists of the Absolute Timing Advance Command MAC CE and a MAC subheader corresponding to the Absolute Timing Advance Command MAC CE.

In one embodiment, the first signaling is addressed to the first RNTI.

In one embodiment, the first signaling is identified by the first RNTI.

In one embodiment, the first signaling is received on a PDCCH.

In one embodiment, a CRC (Cyclic Redundancy Check) of the first signaling is scrambled by the first RNTI.

In one embodiment, the first RNTI is a non-negative positive number.

In one embodiment, the first RNTI is a positive integer.

In one embodiment, the first RNTI is a bit string.

In one embodiment, a length of the first RNTI is 16 bits.

In one embodiment, the first RNTI is a C-RNTI.

In one embodiment, the first RNTI is a C-RNTI of the first node U01.

In one embodiment, the first RNTI is a C-RNTI of the first node U01 in a PCell.

In one embodiment, the first RNTI is a C-RNTI of the first node U01 in an MCG (Master Cell Group).

In one embodiment, the first RNTI is a C-RNTI of the first node U01 in a serving cell receiving the first message.

In one embodiment, the first random access preamble is used to indicate that a type of the first random access procedure is 2-step random access.

In one embodiment, the second MAC PDU is a MAC PDU.

In one embodiment, the second MAC PDU comprises at least one MAC subPDU.

In one embodiment, the second MAC PDU comprises only one MAC subPDU, and the MAC subPDU consists of the first C-RNTI MAC CE and a MAC subheader corresponding to the first C-RNTI MAC CE.

In one embodiment, the second MAC PDU comprises multiple MAC subPDUs, and one of the multiple MAC subPDUs consists of the first C-RNTI MAC CE and a MAC subheader corresponding to the first C-RNTI MAC CE.

In one embodiment, the second MAC PDU does not comprise a CCCH (Common Control Channel) SDU (Service Data Unit).

In one embodiment, the first C-RNTI MAC CE is a MAC CE.

In one embodiment, the first C-RNTI MAC CE is a C-RNTI MAC CE.

In one embodiment, a C-RNTI field in the first C-RNTI MAC CE is set to a value of the first RNTI.

In one embodiment, for a format of the first C-RNTI MAC CE, refer to clause 6.1.3.2 in 3GPP TS 38.321.

In one embodiment, PUSCH resources associated with the first random access preamble are used to bear the second MAC PDU.

In one embodiment, an RRC message is used to determine PUSCH resources associated with the first random access preamble.

### Embodiment 6

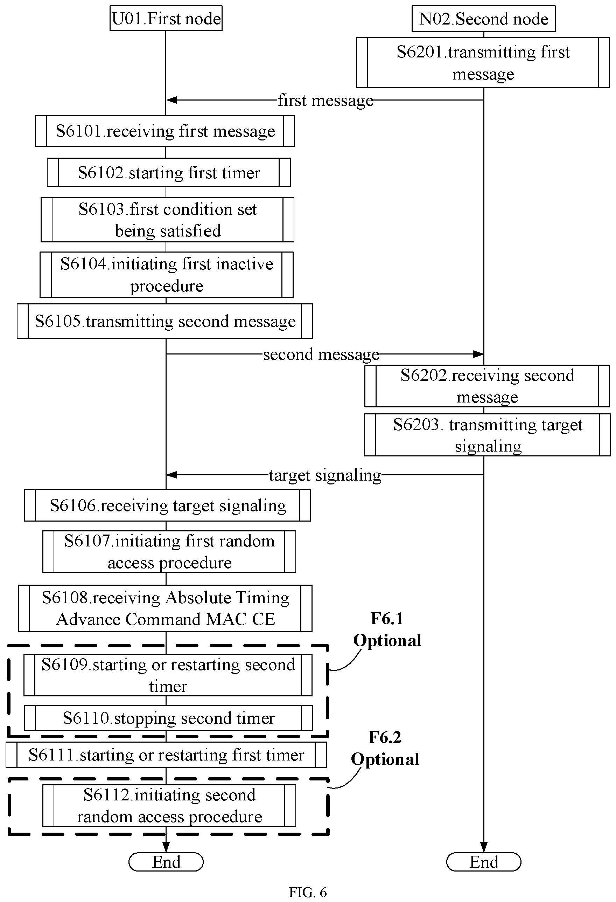

Embodiment 6 illustrates a flowchart of a radio signal transmission according to another embodiment of the present application, as shown in FIG. 6. It is particularly underlined that the order illustrated in the embodiment does not put constraints over sequences of signal transmissions and implementations.

**The first node U01**, in step S6101, receives a first message, the first message comprises a first configuration uplink grant and a maximum value of the first timer; in step S6102, as a response to the first message being received, starts the first timer; in step S6103, determines that a first condition set is satisfied; in step S6104, in RRC_INACTIVE state, as a response to a first condition set being satisfied, initiates the first inactive procedure; in step S6105, in the first inactive procedure, transmits a second message, the second message is used to request performing a data transmission in the RRC_INACTIVE state; in step S6106, receives a target signaling, the target signaling is used to determine that the second message is successfully transmitted; in step S6107, initiates a first random access procedure; in step S6108, receives an Absolute Timing Advance Command MAC CE in a first random access procedure; in step S6109, as a response to the Absolute Timing Advance Command MAC CE being received, starts or restarts the second timer; in step S6110, as a response to the Absolute Timing Advance Command MAC CE being received, stops the second timer; in step S6111, as a response to the Absolute Timing Advance Command MAC CE being received, starts or restarts the first timer; in step S6112, initiates a second random access procedure.

**The second node N02,** in step S6201, transmits the first message; in step S6202, receives the second message; in step S6203, transmits the target message.

In embodiment 6, both the first timer and the second timer are used to maintain uplink time alignment; the first timer and the second timer are different; the first message indicates entering or maintaining the RRC_INACTIVE state; the target signaling is scrambled by the first RNTI; the first condition set includes: the first timer is running; the first random access procedure is initiated after the target signaling; when the Absolute Timing Advance Command MAC CE is received, the first inactive procedure is ongoing.

In one embodiment, the first configuration uplink grant belongs to the first cell.

In one embodiment, the first configuration uplink grant is a UL grant.

In one embodiment, the dotted box F6.1 is optional.

In one embodiment, the dotted box F6.1 exists.

In one subembodiment of the embodiment, as a response to the Absolute Timing Advance Command MAC CE being received, first start or restart the second timer, then stop the second timer and start or restart the first timer.

In one subembodiment of the embodiment, as a response to the Absolute Timing Advance Command MAC CE being received, the first inactive procedure is ongoing is used to determine first starting or restarting the second timer, then stopping the second timer and starting or restarting the first timer.

In one subembodiment of the embodiment, as a response to the Absolute Timing Advance Command MAC CE being received, the first inactive procedure is ongoing triggers first starting or restarting the second timer, then stopping the second timer and starting or restarting the first timer.

In one embodiment, the dotted box F6.1 does not exist.

In one subembodiment of the embodiment, as a response to the Absolute Timing Advance Command MAC CE being received, start or restart the first timer.

In one subembodiment of the embodiment, as a response to the Absolute Timing Advance Command MAC CE being received, the second timer is not started or restarted.

In one subembodiment of the embodiment, as a response to the Absolute Timing Advance Command MAC CE being received, the second timer is not stopped.

In one subembodiment of the embodiment, as a response to the Absolute Timing Advance Command MAC CE being received, the first inactive procedure is ongoing is used to determine starting or restarting the first timer.

In one subembodiment of the embodiment, as a response to the Absolute Timing Advance Command MAC CE being received, the first inactive procedure is ongoing triggers starting or restarting the first timer.

In one embodiment, the dotted box F6.2 is optional.

In one embodiment, the dotted box F6. 2 exists.

In one subembodiment of the embodiment, the second random access procedure is initiated.

In one subembodiment of the embodiment, the second random access procedure is initiated after the target signaling; a contention solution for the second random access procedure is considered successful, the first inactive procedure is ongoing.

In one subembodiment of the embodiment, the second random access procedure occurs before the first random access procedure.

In one subembodiment of the embodiment, the second random access procedure occurs after the first random access procedure.

In one subembodiment of the embodiment, the second random access procedure and the first random access procedure are not executed at the same time.

In one subembodiment of the embodiment, the second random access procedure and the first random access procedure are initiated on a same MAC entity.

In one embodiment, the dotted box F6.2 does not exist.

In one subembodiment of the embodiment, the second random access procedure is not initiated.

In one embodiment, a transmitter of the first message is a maintenance base station of a PCell of the first node U01.

In one embodiment, a transmitter of the first message is a maintenance base station of the first cell.

In one embodiment, a transmitter of the first message is a base station.

In one embodiment, a transmitter of the first message is a UE.

In one embodiment, the first message is transmitted via an air interface.

In one embodiment, the first message is transmitted through SRB1 (Signalling Radio Bearer 1).

In one embodiment, the first message is a downlink (DL) message.

In one embodiment, the first message is a sidelink message.

In one embodiment, a logical channel of the first message is a DCCH (Dedicated Control Channel).

In one embodiment, the first message is generated at the RRC sub-layer.

In one embodiment, the first message is an RRCRelease message.

In one embodiment, the first message is a suspendConfig in an RRCRelease message.

In one embodiment, the first message is an RRCRelease message, and the RRCRelease message comprises a SuspendConfig.

In one embodiment, the first message is an RRCRelease message, and the RRCRelease message comprises a suspendConfig, the suspendConfig comprises at least one of time-domain allocation information of a first configuration uplink grant or frequency-domain allocation information of the first configuration uplink grant.

In one embodiment, the first message comprises a suspendConfig, the suspendConfig is configured with a sdt-Config, and the sdt-Config is configured with the first configuration uplink grant.

In one embodiment, the first message is an RRCRelease message, and the RRCRelease message comprises a suspendConfig, and the suspendConfig is used to indicate that the first node U01 enters or maintains the RRC_INACTIVE state.

In one embodiment, at least one RRC field in the first message is used to configure the first configuration uplink grant.

In one subembodiment of the embodiment, one of at least one RRC field is a SDT-Config or SDT-Config-r17 or SDT-Config-r18.

In one subembodiment of the embodiment, one of at least one RRC field is a SDT-CG-Config or SDT-CG-Config-r17 or SDT-CG-Config-r18.

In one subembodiment of the embodiment, one of at least one RRC field is a SDT-MAC-PHY-CG-Config or SDT-MAC-PHY-CG-Config-r17 or SDT-MAC-PHY-CG-Config-r18.

In one subembodiment of the embodiment, one of at least one RRC field is a cg-SDT-Config-Initial-BWP-NUL or cg-SDT-Config-Initial-BWP-NUL-r17 or cg-SDT-Config-Initial-BWP-NUL-r18.

In one subembodiment of the embodiment, one of at least one RRC field is a cg-SDT-Config-Initial-BWP-SUL or cg-SDT-Config-Initial-BWP-SUL-r17 or cg-SDT-Config-Initial-BWP-SUL-r18.

In one subembodiment of the embodiment, one of at least one RRC field is a BWP-Uplink-Dedicated-SDT or BWP-Uplink-Dedicated-SDT-r17 or BWP-Uplink-Dedicated-SDT-r18.

In one subembodiment of the embodiment, one of at least one RRC field is a BWP-Uplink-Dedicated-SDT or BWP-Uplink-Dedicated-SDT-r17 or BWP-Uplink-Dedicated-SDT-r18.

In one subembodiment of the embodiment, one of at least one RRC field is a ConfiguredGrantConfig.

In one subembodiment of the embodiment, one of at least one RRC field is a CG-SDT-Configuration or CG-SDT-Configuration-r17 or CG-SDT-Configuration-r18.

In one embodiment, one RRC field in the first message indicates a maximum value of the first timer.

In one subembodiment of the embodiment, the RRC field is a cg-SDT-TimeAlignmentTimer or cg-SDT-TimeAlignmentTimer-r17 or cg-SDT-TimeAlignmentTimer-r18.

In one subembodiment of the above embodiment, a value of the RRC field is set as a maximum value of the first timer.

In one subembodiment of the above embodiment, a maximum value of the first timer is configured through a TimeAlignmentTimer.

In one embodiment, a maximum value of the first timer refers to a maximum running time of the first timer.

In one embodiment, a maximum value of the first timer refers to a maximum value of timing of the first timer.

In one embodiment, a maximum value of the first timer is used to determine an expiration time of the first timer.

In one embodiment, after the first message is received and before the first inactive procedure is initiated, the first node U01 does not transmit any RRC message used to request resuming an RRC connection.

In one embodiment, after the first message is received and before the first inactive procedure is initiated, the first node U01 remains in the RRC_INACTIVE state.

In one embodiment, after the first message is received and before the first inactive procedure is initiated, the first node U01 does not initiate an RRC connection resume procedure.

In one embodiment, the first message indicates a first radio bearer set; accompanying the second message, resume each radio bearer in the first radio bearer set.

In one embodiment, the first message explicitly indicates at least one radio bearer comprised in the first radio bearer set.

In one embodiment, the first message implicitly indicates at least one radio bearer comprised in the first radio bearer set.

In one embodiment, at least one RRC field in the first message is used to indicate the first radio bearer set.

In one subembodiment of the embodiment, one of the at least one RRC field is sdt-DRB-List or sdt-DRB-List-r17 or sdt-DRB-List-r18.

In one subembodiment of the embodiment, one of the at least one RRC field is sdt-SRB2-Indication or sdt-SRB2-Indication-r17 or sdt-SRB2-Indication-r18.

In one embodiment, the "as a response to the first message being received" includes: when the first message is received.

In one embodiment, the "as a response to the first message being received" includes: if the first message is received.

In one embodiment, the "as a response to the first message being received" includes: after the first message is received.

In one embodiment, the "as a response to the first message being received, starting the first timer" includes: as a response to the first message being received, the RRC sublayer of the first node U01 instructs the MAC sublayer of the first node U01 to start the first timer; when the MAC sublayer of the first node U01 receives an instruction from the RRC sublayer of the first node U01 to start the first timer, it starts the first timer.

In one embodiment, the "as a response to the first message being received, starting the first timer" includes: the first node U01 receiving the first message is used to determine starting the first timer.

In one embodiment, as a response to the first condition set being satisfied, the MAC layer of the first node U01 indicates to the higher sub-layer of the first node U01 that a condition for initiating the first inactive procedure is satisfied.

In one embodiment, the first condition set is a condition for initiating the first inactive procedure.

In one embodiment, the first condition set comprises a condition for initiating the first inactive procedure.

In one embodiment, the first condition set comprises that at least the first timer is running.

In one embodiment, the first condition set comprises a first condition subset and a second condition subset, and the second condition subset comprises that at least the first timer is running.

In one embodiment, the first condition subset includes: the higher sublayer of the RRC sublayer of the first node U01 requests resuming an RRC connection.

In one embodiment, the first condition subset includes: a sdt-Config is configured.

In one embodiment, the first condition subset includes: SIB1 comprises sdt-ConfigCommon.

In one embodiment, the first condition subset includes: all pending uplink data are mapped to the first radio bearer set.

In one embodiment, the first condition subset includes: the lower sublayer of the RRC sublayer of the first node U01 indicates to the RRC sublayer that a condition for initiating the SDT procedure is satisfied.

In one embodiment, the first condition subset includes: the higher sublayer of the RRC sub-layer of the first node U01 requests resuming an RRC connection, sdt-Config is configured, SIB1 comprises sdt-ConfigCommon, and all pending uplink data is mapped to the first radio bearer set.

In one embodiment, the second condition subset includes: the lower sublayer of the RRC sublayer of the first node U01 indicates to the RRC sublayer that a condition for initiating the SDT procedure is satisfied.

In one embodiment, the second condition subset includes: a data volume of pending uplink data for all radio bearers in the first radio bearer set is less than or equal to sdt-DataVolumeThreshold.

In one embodiment, the second condition subset includes: RSRP referenced by downlink pathloss is higher than sdt-RSRP-Threshold.

In one embodiment, the second condition subset includes: CG-SDT is configured on a selected uplink carrier.

In one embodiment, the second condition subset includes: a TA of configuration grant type 1 resource corresponding to the first configuration uplink grant is available.

In one embodiment, the second condition subset includes: SS-RSRP of each SSB configured for CG-SDT is higher than cg-SDT-RSRP-ThresholdSSB.

In one embodiment, the second condition subset includes: a data volume of pending uplink data for all radio bearers in the first radio bearer set is less than or equal to sdt-DataVolumeThreshold, and RSRP referenced by downlink pathloss is higher than sdt-RSRP-Threshold, and a CG-SDT is configured on a selected uplink carrier, and a TA of a configuration grant type 1 resource corresponding to the first configuration uplink grant is available, and SS-RSRO of each SSB configured for a CG-SDT is higher than cg-SDT-RSRP-ThresholdSSB, and the lower sublayer of the RRC sublayer of the first node U01 indicates to the RRC sublayer that a condition for initiating the SDT procedure is satisfied.

In one embodiment, the "performing a data transmission in the RRC_INACTIVE state" refers to: SDT.

In one embodiment, the "performing a data transmission in the RRC_INACTIVE state" refers to: MO-SDT.

In one embodiment, the "performing a data transmission in the RRC_INACTIVE state" refers to: MT-SDT.

In one embodiment, the "performing a data transmission in the RRC_INACTIVE state" refers to: receiving Multicast/Broadcast Service (MBS) in the RRC_INACTIVE state.

In one embodiment, the second message is transmitted through a Common Control Channel (CCCH).

In one embodiment, the second message is transmitted through a Common Control Channel 1 (CCCH1).

In one embodiment, the second message is a CCCH message.

In one embodiment, a MAC SDU corresponding to the second message is a CCCH SDU.

In one embodiment, the second message is transmitted on the first configuration uplink grant.

In one embodiment, the second message is an RRCResumeRequest message or an RRCResumeRequest1 message.

In one embodiment, in the first inactive procedure, start the timer T319a.

In one embodiment, after the second message is submitted to a lower sublayer, start the timer T319a.

In one embodiment, after a time interval after the second message is delivered to a lower sublayer, the timer T319a is started.

In one embodiment, after the second message is transmitted for the first time at a lower sublayer of the RRC sublayer of the first node U01, start the timer T319a.

In one embodiment, the target signaling is received on a PDCCH.

In one embodiment, the target signaling is a DCI.

In one embodiment, the target signaling is a PDCCH transmission.

In one embodiment, the target signaling is a response to an initial transmission of the first inactive procedure.

In one embodiment, the target signaling is a PDCCH addressed to the first RNTI received after an initial transmission of the first inactive procedure.

In one embodiment, the target signaling is any PDCCH addressed to the first RNTI received after an initial transmission of the first inactive procedure.

In one embodiment, the target signaling is addressed to the first RNTI, and the target signaling is a response to an initial transmission of the first inactive procedure, the initial transmission comprising the second message.

In one embodiment, the initial transmission of the first inactive procedure comprises the second message.

In one embodiment, the first message indicates entering the RRC_INACTIVE state.

In one embodiment, the first message indicates maintaining the RRC_INACTIVE state.

In one embodiment, the first message is received in RRC_CONNECTED state, and as a response to the first message being received, the first node U01 enters the RRC_INACTIVE state.

In one embodiment, the first message is received in RRC_INACTIVE state, and as a response to the first message being received, the first node U01 maintains the RRC_INACTIVE state.

In one embodiment, a CRC of the target signaling is scrambled by the first RNTI.

In one embodiment, the target signaling is addressed to the first RNTI.

In one embodiment, at least after the target signaling is received, the second random access procedure is initiated.

In one embodiment, the second random access procedure is initiated, and the target signaling is already successfully received.

### Embodiment 7

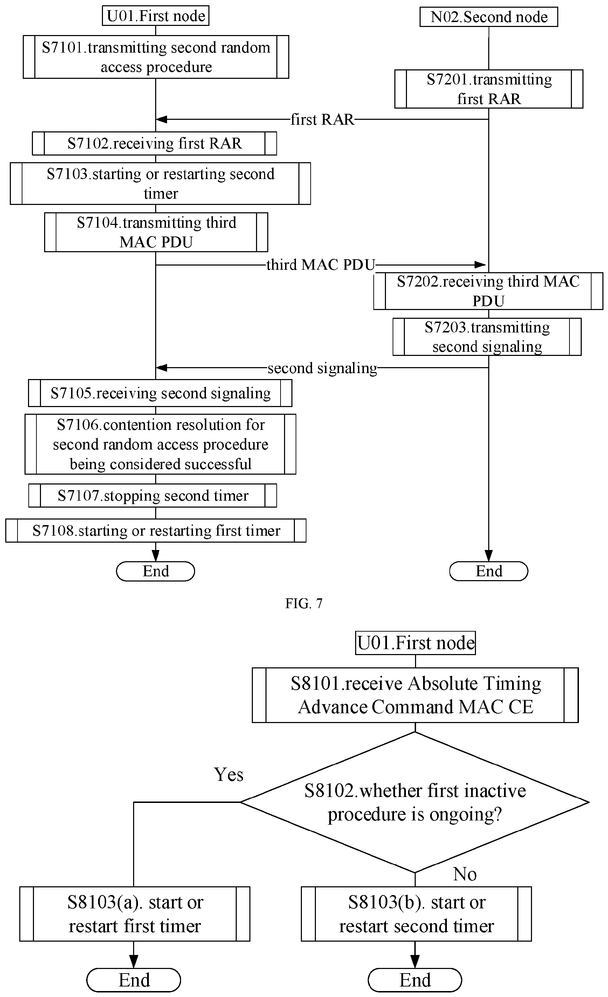

Embodiment 7 illustrates a flowchart of a radio signal transmission according to another embodiment in the present application, as shown in FIG. 7. It is particularly underlined that the order illustrated in the embodiment does not put constraints over sequences of signal transmissions and implementations.

**The first node U01**, in step S7101, initiates a second random access procedure; in step S7102, receives a first RAR in a second random access procedure; in step S7103, as a response to the first RAR being received, starts or restarts the second timer; in step S7104, transmits a third MAC PDU according to the first RAR, the third MAC PDU comprises at least a second C-RNTI MAC CE, the second C-RNTI MAC CE comprises the first RNTI; in step S7105, as a response to the third MAC PDU being transmitted, receives a second signaling; in step S7106, a contention solution for the second random access procedure is considered successful; in step S7107, as a response to a contention solution for the second random access procedure being considered successful, stops the second timer; in step S7108, as a response to a contention solution for the second random access procedure being considered successful, starts or restarts the first timer.

**The second node N02,** in step S7201, transmits the first RAR; in step S7202, receives the third MAC PDU; transmits the second signaling in step S7203.

In embodiment 7, the second signaling is scrambled by the first RNTI; the second random access procedure is initiated after the target signaling; a contention solution for the second random access procedure is considered successful, the first inactive procedure is ongoing.

In one embodiment, when the first RAR is received, the second timer is not running.

In one embodiment, when the first RAR is received, the first timer is running.

In one embodiment, when the first RAR is received, the first timer is not running.

In one embodiment, when the second random access procedure is initiated, the second timer is running.

In one embodiment, when the second random access procedure is initiated, the second timer is not running.

In one embodiment, when the second random access procedure is initiated, the first timer is running.

In one embodiment, when the second random access procedure is initiated, the first timer is not running.

In one embodiment, the second random access procedure is contention-based random access procedure.

In one embodiment, the second random access procedure is initiated by the RRC sublayer.

In one embodiment, the second random access procedure is initiated by the MAC sublayer.

In one embodiment, the second random access procedure is a random access procedure.

In one embodiment, a random access type of the second random access procedure is a 4-step RA type.

In one embodiment, the second random access procedure is a 4-step random access procedure.

In one embodiment, when the second random access procedure is initialized, set RA_TYPE to 4-step RA.

In one embodiment, a random access type of the second random access procedure is a 2-step RA type.

In one embodiment, the second random access procedure is a 2-step random access procedure.

In one embodiment, when the second random access procedure is initialized, set RA_TYPE to 2-step RA.

In one embodiment, when the second random access procedure is initialized, set RA_TYPE to 2-step RA, and in the second random access procedure, RA_TYPE is set as 4-stepRA.

In one embodiment, when the second random access procedure is initialized, set RA_TYPE to 2-step RA, and in the second random access procedure, RA_TYPE is not set as 4-stepRA.

In one embodiment, the first RAR is a MAC RAR.

In one embodiment, the first RAR is a fallbackRAR.

In one embodiment, for the format of the first RAR, refer to clause 6.2.3 in 3GPP TS38.321.

In one embodiment, for the format of the first RAR, refer to clause 6.2.3a in 3GPP TS38.321.

In one embodiment, the first RAR is successfully received.

In one embodiment, before the first RAR, transmit a second random access preamble; set PREAMBLE_INDEX as the second random access preamble.

In one embodiment, before the first RAR, transmit a second random access preamble; set PREAMBLE_INDEX as an index of the second random access preamble.

In one embodiment, a MAC subheader in a MAC subPDU to which the first RAR belongs comprises an RAPID field, and a Random Access preamble identifier in the RAPID field matches the PREAMBLE_INDEX.

In one embodiment, in a running period of ra-ResponseWindow, receive the first RAR.

In one embodiment, in a running period of msgB-ResponseWindow, receive the first RAR.

In one embodiment, the second random access preamble being transmitted is used to determine a start of the ra-ResponseWindow.

In one embodiment, the second random access preamble being transmitted is used to determine a start of the msgB-ResponseWindow.

In one embodiment, the first RAR comprises a UL Grant field, and uplink resources indicated by the UL Grant field are used to transmit the third MAC PDU.

In one embodiment, the third MAC PDU is a MAC PDU.

In one embodiment, the third MAC PDU comprises at least one MAC subPDU.

In one embodiment, the third MAC PDU comprises only one MAC subPDU, the MAC subPDU consists of the second C-RNTI MAC CE and a MAC subheader corresponding to the second C-RNTI MAC CE.

In one embodiment, the third MAC PDU comprises multiple MAC subPDUs, and one of the multiple MAC subPDUs consists of the second C-RNTI MAC CE and a MAC subheader corresponding to the second C-RNTI MAC CE.

In one embodiment, the third MAC PDU does not comprise a CCCH SDU.

In one embodiment, the second C-RNTI MAC CE is a MAC CE.

In one embodiment, the second C-RNTI MAC CE is a C-RNTI MAC CE.

In one embodiment, a C-RNTI field in the second C-RNTI MAC CE is set to a value of the first RNTI.

In one embodiment, for a format of the second C-RNTI MAC CE, refer to clause 6.1.3.2 in 3GPP TS 38.321.

In one embodiment, the first C-RNTI MAC CE and the second C-RNTI MAC CE are two MAC CEs.

In one embodiment, the second signaling is a DCI, and the DCI is used for scheduling PUSCH.

In one embodiment, the second signaling is a DCI, and a format of the DCI is Format 0-0.

In one embodiment, the second signaling is a DCI, and a format of the DCI is Format 0-1.

In one embodiment, the second signaling is a DCI, and a format of the DCI is Format 0-2.

In one embodiment, the second signaling is a DCI, the DCI comprises a New data indicator field, and an NDI (New Data Indicator) indicated by the NDI New data indicator field has been toggled.

In one embodiment, the second signaling is a DCI, the DCI comprises a New data indicator field, and an NDI indicated by the NDI New data indicator field is considered to have been toggled.

In one embodiment, the second signaling is a PDCCH transmission.

In one embodiment, the second signaling is received on a PDCCH.

In one embodiment, the second signaling comprises a UL grant for a new transmission.

In one embodiment, the second signaling is a PDCCH transmission, the second signaling is addressed to the first RNTI, and the second signaling comprises a UL grant for a new transmission.

In one embodiment, in a running period of ra-ContentionResolutionTimer, receive the second signaling.

In one embodiment, the third MAC PDU being transmitted is used to determine a start of the ra-ContentionResolution Timer.

In one embodiment, the "as a response to the first RAR being received" includes: if the first RAR is received.

In one embodiment, the "as a response to the first RAR being received" includes: when the first RAR is received.

In one embodiment, the "as a response to the first RAR being received" includes: after the first RAR is received.

In one embodiment, the first RAR being received triggers starting or restarting the second timer.

In one embodiment, as a response to the first RAR being received, apply a TAC in the first RAR, and start or restart the second timer.

In one embodiment, according to clause 4.2 of 3GPP TS 38.213, apply a TAC in the first RAR.

In one embodiment, the "as a response to a contention resolution for the second random access procedure being considered successful" includes: if a contention solution for the second random access procedure is considered successful.

In one embodiment, the "as a response to a contention resolution for the second random access procedure being considered successful" includes: when a contention solution for the second random access procedure is considered successful.

In one embodiment, the "as a response to a contention resolution for the second random access procedure being considered successful" includes: after a contention solution for the second random access procedure is considered successful.

In one embodiment, a contention resolution for the second random access procedure being considered successfully triggers stopping the second timer, and starting or restarting the first timer.

In one embodiment, the second signaling is addressed to the first RNTI.

In one embodiment, the second signaling is identified by the first RNTI.

In one embodiment, a CRC of the second signaling is scrambled by the first RNTI.

In one embodiment, at least after the target signaling is received, the second random access procedure is initiated.

In one embodiment, when the second random access procedure is initiated, the target signaling is already successfully received.

In one embodiment, at least the second signaling is used to determine that a contention resolution for the second random access procedure is considered successful.

In one embodiment, the second signaling is used to determine that a contention resolution for the second random access procedure is considered successful.

In one embodiment, the second signaling being received is used to determine that a contention resolution for the second random access procedure is considered successful.

In one embodiment, as a response to the second signaling being received, it is considered that a contention resolution for the second random access procedure is successful.

In one embodiment, as a response to the second signaling being received, it is considered that a contention resolution for the second random access procedure is successful, and stop the ra-ContentionResolution Timer.

In one embodiment, as a response to the second signaling being received, it is considered that a contention resolution for the second random access procedure is successful, stop the ra-ContentionResolutionTimer, and it is considered that the second random access procedure is successfully completed.

In one embodiment, as a response to a contention resolution for the second random access procedure is considered successful, the first inactive procedure being executed is used to determine stopping the second timer, and starting or restarting the first timer.

In one embodiment, as a response to a contention resolution for the second random access procedure is considered successful, the first inactive procedure being executed triggers stopping the second timer, and starting or restarting the first timer.

### Embodiment 8

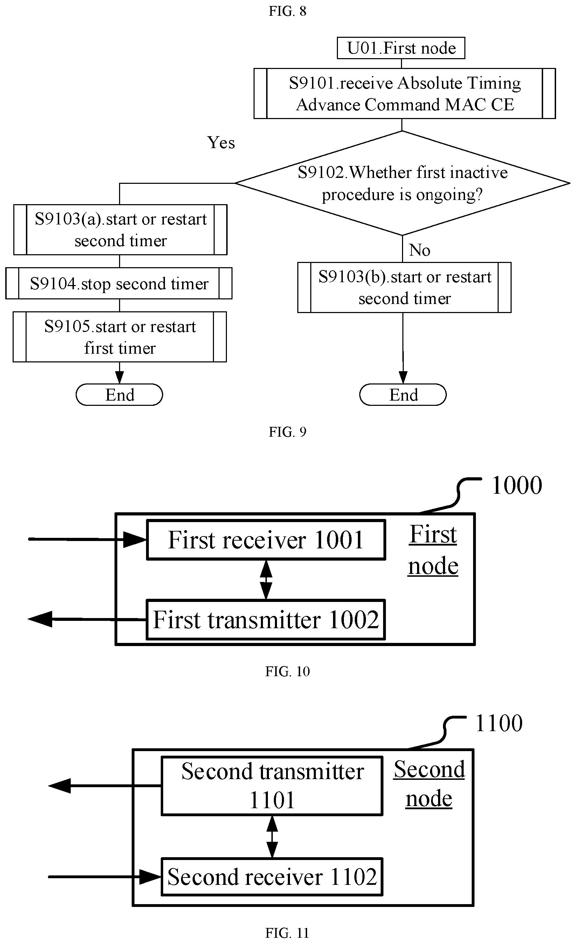

Embodiment 8 illustrates a flowchart of a radio signal transmission for determining starting or restarting a first timer or a second timer according to whether at least a first inactive procedure is ongoing according to one embodiment of the present application, as shown in FIG. 8. It is particularly underlined that the order illustrated in the embodiment does not put constraints over sequences of signal transmissions and implementations.

**The first node U01**, in step S8101, receives an Absolute Timing Advance Command MAC CE in a first random access procedure; in step S8102, as a response to the Absolute Timing Advance Command MAC CE being received, judges whether a first inactive procedure is ongoing, if the first inactive procedure is ongoing, enters S8103(a), and if the first inactive procedure is not ongoing, enters S8103(b); in the S8103(a), starts or restarts the first timer; in the S8103(b), starts or restarts the second timer.

In embodiment 8, as a response to the Absolute Timing Advance Command MAC CE being received, determines starting or restarting a first timer or a second timer according to whether at least a first inactive procedure is ongoing; the behavior of determining starting or restarting a first timer or second timer according to at least whether a first inactive procedure is ongoing includes: if the first inactive procedure is ongoing, starting or restarting the first timer; if the first inactive procedure is not ongoing, starting or restarting the second timer; both the first timer and the second timer are used to maintain uplink time alignment; the first timer and the second timer are different.

In one embodiment, if the first inactive procedure is ongoing, the Absolute Timing Advance Command MAC CE being received is not used to trigger starting or restarting the second timer.

In one embodiment, if the first inactive procedure is not ongoing, the Absolute Timing Advance Command MAC CE being received is not used to trigger starting or restarting the first timer.

### Embodiment 9

Embodiment 9 illustrates a flowchart of a radio signal transmission for determining starting or restarting a first timer or a second timer according to whether at least a first inactive procedure is ongoing according to another embodiment of the present application, as shown in FIG. 9. It is particularly underlined that the order illustrated in the embodiment does not put constraints over sequences of signal transmissions and implementations.

**The first node U01**, in step S9101, receives an Absolute Timing Advance Command MAC CE in a first random access procedure; in step S9102, as a response to the Absolute Timing Advance Command MAC CE being received, judges whether a first inactive procedure is ongoing, if the first inactive procedure is ongoing, enters S9103(a), and if the first inactive procedure is not ongoing, enters S9103(b); in the S9103(a), starts or restarts the second timer; in the S9103(b), starts or restarts the second timer; in the S9104, stops the second timer; in the S9105, starts or restarts the first timer.

In embodiment 9, as a response to the Absolute Timing Advance Command MAC CE being received, determines starting or restarting a first timer or a second timer according to whether at least a first inactive procedure is ongoing; the behavior of determining starting or restarting a first timer or second timer according to whether a first inactive procedure is ongoing includes: first starting or restarting the second timer, and then determining whether to stop the second timer and starting or restarting the first timer according to whether the first inactive procedure is ongoing.

In one embodiment, the step S9104 is taken before the step S9105.

In one embodiment, the step S9104 is taken after the step S9105.

In one embodiment, the step S9104 and the step S9105 are executed at the same time.

In one embodiment, the "determining whether to stop the second timer and start or restart the first timer according to whether the first inactive procedure is ongoing" includes: only when the first inactive procedure is ongoing, stopping the second timer and starting or restarting the first timer.

In one embodiment, the "determining whether to stop the second timer and start or restart the first timer according to whether the first inactive procedure is ongoing" includes: if the first inactive procedure is ongoing, stopping the second timer and starting or restarting the first timer; if the first inactive procedure is not ongoing, the behavior of "determining whether to stop the second timer and start or restart the first timer according to whether the first inactive procedure is ongoing" is not executed.

In one embodiment, as a response to the Absolute Timing Advance Command MAC CE being received, start or restart the second timer.

In one embodiment, as a response to the Absolute Timing Advance Command MAC CE being received, start or restart the second timer, and if the first inactive procedure is ongoing, stop the second timer and start or restart the first timer.

In one embodiment, as a response to the Absolute Timing Advance Command MAC CE being received, start or restart the second timer, and if the first inactive procedure is not ongoing, do not stop the second timer and do not start the first timer and do not restart the first timer.

In one embodiment, as a response to the Absolute Timing Advance Command MAC CE being received, starting or restarting the second timer, stopping the second timer, and starting or restarting the first timer are used to determine: as a response to the Absolute Timing Advance Command MAC CE being received, starting or restarting the first timer.

In one embodiment, if the first inactive procedure is not ongoing, the Absolute Timing Advance Command MAC CE being received is not used to trigger stopping the second timer, and the Absolute Timing Advance Command MAC CE being received is not used to trigger starting or restarting the first timer.

### Embodiment 10

Embodiment 10 illustrates a structure block diagram of a processor in a first node according to one embodiment of the present application, as shown in FIG. 10. In FIG. 10, a processor 1000 in a first node comprises a first receiver 1001 and a first transmitter 1002.

The first processor receives an Absolute Timing Advance Command MAC CE in a first random access procedure; as a response to the Absolute Timing Advance Command MAC CE being received, determines starting or restarting a first timer or a second timer according to whether at least a first inactive procedure is ongoing.

In embodiment 10, the behavior of determining starting or restarting a first timer or second timer according to at least whether a first inactive procedure is ongoing includes: if the first inactive procedure is ongoing, starting or restarting the first timer; if the first inactive procedure is not ongoing, starting or restarting the second timer; both the first timer and the second timer are used to maintain uplink time alignment; the first timer and the second timer are different.

In one embodiment, the first processor receives a first signaling and a first MAC PDU in the first random access procedure, the first signaling indicates scheduling information of a PDSCH, the PDSCH is used to bear the first MAC PDU, the first MAC PDU comprises at least the Absolute Timing Advance Command MAC CE; herein, the first signaling is scrambled by a first RNTI, and the first RNTI is used to identify the first node.

In one embodiment, the first processor transmits a first random access preamble and a second MAC PDU in the first random access procedure, the second MAC PDU comprises at least a first C-RNTI MAC CE, and the first C-RNTI MAC CE comprises the first RNTI; herein, PUSCH resources associated with the first random access preamble are used to bear the second MAC PDU.

In one embodiment, the first processor receives a first message, the first message comprises a first configuration uplink grant and a maximum value of the first timer; as a response to the first message being received, starts the first timer; in RRC_INACTIVE state, as a response to a first condition set being satisfied, initiating the first inactive procedure; in the first inactive procedure, transmitting a second message, the second message being used to request performing a data transmission in the RRC_INACTIVE state; receiving a target signaling, the target signaling being used to determine that the second message is successfully transmitted; herein, the first message indicates entering or maintaining the RRC_INACTIVE state; the target signaling is scrambled by the first RNTI; the first condition set includes: the first timer is running; the first random access procedure is initiated after the target signaling; when the Absolute Timing Advance Command MAC CE is received, the first inactive procedure is ongoing.

In one embodiment, the first processor receives a first RAR in a second random access procedure; transmitting a third MAC PDU according to the first RAR, the third MAC PDU comprising at least a second C-RNTI MAC CE, the second C-RNTI MAC CE comprising the first RNTI; as a response to the third MAC PDU being transmitted, receiving a second signaling; as a response to the first RAR being received, starting or restarting the second timer; as a response to a contention resolution for the second random access procedure being considered successfully, stopping the second timer, and starting or restarting the first timer; herein, the second signaling is scrambled by the first RNTI; the second random access procedure is initiated after the target signaling; a contention solution for the second random access procedure is considered successful, the first inactive procedure is ongoing.

In one embodiment, the behavior of determining starting or restarting a first timer or second timer according to whether a first inactive procedure is ongoing includes: first starting or restarting the second timer, and then determining whether to stop the second timer and starting or restarting the first timer according to whether the first inactive procedure is ongoing.

In one embodiment, the first receiver 1001 comprises the antenna 452, the receiver 454, the multi-antenna receiving processor 458, the receiving processor 456, the controller/ processor 459, the memory 460 and the data source 467 in FIG. 4 of the present application.

In one embodiment, the first receiver 1001 comprises the antenna 452, the receiver 454, the multi-antenna receiving processor 458 and the receiving processor 456 in FIG. 4 of the present application.

In one embodiment, the first receiver 1001 comprises the antenna 452, the receiver 454 and the receiving processor 456 in FIG. 4 of the present application.

In one embodiment, the first transmitter 1002 comprises the antenna 452, the transmitter 454, the multi-antenna transmitting processor 457, the transmitting processor 468, the controller/ processor 459, the memory 460, and the data source 467 in FIG. 4 of the present application.

In one embodiment, the first transmitter 1002 comprises the antenna 452, the transmitter 454, the multi-antenna transmitting processor 457 and the transmitting processor 468 in FIG. 4 of the present application.

In one embodiment, the first transmitter 1002 comprises the antenna 452, the transmitter 454 and the transmitting processor 468 in FIG. 4 of the present application.

In one embodiment, the first processor belongs to the first receiver 1001.

In one embodiment, the first processor belongs to the first transmitter 1002.

In one embodiment, the first processor comprises a part of the first receiver 1001 and a part of the first transmitter 1002.

### Embodiment 11

Embodiment 11 illustrates a structure block diagram of a processor in a second node according to one embodiment of the present application, as shown in FIG. 11. In FIG. 11, a processor 1100 in a second node comprises a second transmitter 1101 and a second receiver 1102.

The second transmitter 1101 transmits an Absolute Timing Advance Command MAC CE in a first random access procedure;

In embodiment 13, as a response to the Absolute Timing Advance Command MAC CE being received, a receiver of the Absolute Timing Advance Command MAC CE determines starting or restarting a first timer or a second timer according to whether at least a first inactive procedure is ongoing; the behavior of a receiver of the Absolute Timing Advance Command MAC CE determines starting or restarting a first timer or a second timer according to whether at least a first inactive procedure is ongoing includes: if the first inactive procedure is ongoing, a receiver of the Absolute Timing Advance Command MAC CE starts or restarts the first timer; if the first inactive procedure is not ongoing, a receiver of the Absolute Timing Advance Command MAC CE starts or restarts the second timer; both the first timer and the second timer are used to maintain uplink time alignment; the first timer and the second timer are different.

In one embodiment, the second transmitter 1101 transmits a first signaling and a first MAC PDU in the first random access procedure, the first signaling indicates scheduling information of a PDSCH, the PDSCH is used to bear the first MAC PDU, the first MAC PDU comprises at least the Absolute Timing Advance Command MAC CE; herein, the first signaling is scrambled by a first RNTI, and the first RNTI is used to identify the first node.

In one embodiment, the second receiver 1102 receives a first random access preamble and a second MAC PDU in the first random access procedure, the second MAC PDU comprises at least a first C-RNTI MAC CE, and the first C-RNTI MAC CE comprises the first RNTI; herein, PUSCH resources associated with the first random access preamble are used to bear the second MAC PDU.

In one embodiment, the second transmitter 1101 transmits a first message, the first message comprises a first configuration uplink grant and a maximum value of the first timer; the second receiver 1102 in the first inactive procedure, receives a second message, the second message is used to request performing a data transmission in the RRC_INACTIVE state; the second transmitter 1101 transmits a target signaling, the target signaling is used to determine that the second message is successfully transmitted; herein, as a response to the first message being received, a receiver of the Absolute Timing Advance Command MAC CE starts the first timer; in RRC_INACTIVE state, as a response to a first condition set being satisfied, a receiver of the Absolute Timing Advance Command MAC CE initiates the first inactive procedure; the first message indicates entering or maintaining the RRC_INACTIVE state; the target signaling is scrambled by the first RNTI; the first condition set includes: the first timer is running; the first random access procedure is initiated after the target signaling; when the Absolute Timing Advance Command MAC CE is received, the first inactive procedure is ongoing.

In one embodiment, the second transmitter 1101 transmits a first RAR in a second random access procedure; the second receiver 1102 receives a third MAC PDU, the third MAC PDU comprises at least a second C-RNTI MAC CE, the second C-RNTI MAC CE comprises the first RNTI; the second transmitter 1101, as a response to the third MAC PDU being received, transmits a second signaling; herein, a receiver of the Absolute Timing Advance Command MAC CE transmits the third MAC PDU according to the first RAR; as a response to the first RAR being received, a receiver of the Absolute Timing Advance Command MAC CE starts or restarts the second timer; as a response to a contention resolution for the second random access procedure being considered successfully, a receiver of the Absolute Timing Advance Command MAC CE stops the second timer, and starts or restarts the first timer; the second signaling is scrambled by the first RNTI; the second random access procedure is initiated after the target signaling; a contention solution for the second random access procedure is considered successful, the first inactive procedure is ongoing.

In one embodiment, the behavior of a receiver of the Absolute Timing Advance Command MAC CE determining starting or restarting a first timer or a second timer according to whether a first inactive procedure is ongoing includes: a receiver of the Absolute Timing Advance Command MAC CE first starts or restarts the second timer, and then determines whether to stop the second timer and start or restart the first timer according to whether the first inactive procedure is ongoing.

In one embodiment, the second transmitter 1101 comprises the antenna 420, the transmitter 418, the multi-antenna transmitting processor 471, the transmitting processor 416, the controller/ processor 475 and the memory 476 in FIG. 4 of the present application.

In one embodiment, the second transmitter 1101 comprises the antenna 420, the transmitter 418, the multi-antenna transmitting processor 471 and the transmitting processor 416 in FIG. 4 of the present application.

In one embodiment, the second transmitter 1101 comprises the antenna 420, the transmitter 418 and the transmitting processor 416 in FIG. 4 of the present application.

In one embodiment, the second receiver 1102 comprises the antenna 420, the receiver 418, the multi-antenna receiving processor 472, the receiving processor 470, the controller/ processor 475 and the memory 476 in FIG. 4 of the present application.

In one embodiment, the second receiver 1102 comprises the antenna 420, the receiver 418, the multi-antenna receiving processor 472 and the receiving processor 470 in FIG. 4 of the present application.

In one embodiment, the second receiver 1102 comprises the antenna 420, the receiver 418 and the receiving processor 470 in FIG. 4 of the present application.

The ordinary skill in the art may understand that all or part of steps in the above method may be implemented by instructing related hardware through a program. The program may be stored in a computer readable storage medium, for example Read-Only Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The user equipment, terminal and UE include but are not limited to Unmanned Aerial Vehicles (UAVs), communication modules on UAVs, telecontrolled aircrafts, aircrafts, diminutive airplanes, mobile phones, tablet computers, notebooks, vehicle-mounted communication equipment, wireless sensors, network cards, Internet of Things (IoT) terminals, RFID terminals, NB-IOT terminals, Machine Type Communication (MTC) terminals, enhanced MTC (eMTC) terminals, data card, network cards, vehicle-mounted communication equipment, low-cost mobile phones, low-cost tablets and other wireless communication devices. The UE and terminal in the present application include but not limited to unmanned aerial vehicles, communication modules on unmanned aerial vehicles, telecontrolled aircrafts, aircrafts, diminutive airplanes, mobile phones, tablet computers, notebooks, vehicle-mounted communication equipment, wireless sensor, network cards, terminals for Internet of Things, RFID terminals, NB-IOT terminals, Machine Type Communication (MTC) terminals, enhanced MTC (eMTC) terminals, data cards, low-cost mobile phones, low-cost tablet computers, etc. The base station or system device in the present application includes but is not limited to macro-cellular base stations, micro-cellular base stations, home base stations, relay base station, gNB (NR node B), Transmitter Receiver Point (TRP), and other radio communication equipment.

The above are merely the preferred embodiments of the present application and are not intended to limit the scope of protection of the present application. Any modification, equivalent substitute and improvement made within the spirit and principle of the present application are intended to be included within the scope of protection of the present application.

## Claims

1. A first node for wireless communications, comprising:
the first processor, receiving an Absolute Timing Advance Command MAC (Medium Access Control) CE (Control Element) in a first random access procedure; as a response to the Absolute Timing Advance Command MAC CE being received, determining starting or restarting a first timer or a second timer according to whether at least a first inactive procedure is ongoing;
wherein the behavior of determining starting or restarting a first timer or second timer according to at least whether a first inactive procedure is ongoing includes: if the first inactive procedure is ongoing, starting or restarting the first timer; if the first inactive procedure is not ongoing, starting or restarting the second timer; both the first timer and the second timer are used to maintain uplink time alignment; the first timer and the second timer are different.

2. The first node according to claim 1, comprising:
the first processor, receiving a first signaling and a first MAC PDU (Protocol Data Unit) in the first random access procedure, the first signaling indicating scheduling information of a PDSCH (Physical Downlink Shared Channel), the PDSCH being used to bear the first MAC PDU, the first MAC PDU comprising at least the Absolute Timing Advance Command MAC CE;
wherein the first signaling is scrambled by a first RNTI, and the first RNTI is used to identify the first node.

3. The first node according to claim 2, comprising:
the first processor, transmitting a first random access preamble and a second MAC PDU in the first random access procedure, the second MAC PDU comprising at least a first C (Cell)-RNTI (Radio Network Temporary Identifier) MAC CE, the first C-RNTI MAC CE comprising the first RNTI;
wherein PUSCH (Physical Uplink Shared Channel) resources associated with the first random access preamble are used to bear the second MAC PDU.

4. The first node according to claim 2 or 3, comprising:
the first processor, receiving a first message, the first message comprising a first configuration uplink grant and a maximum value of the first timer; as a response to the first message being received, starting the first timer; in RRC (Radio Resource Control)_INACTIVE state, as a response to a first condition set being satisfied, initiating the first inactive procedure; in the first inactive procedure, transmitting a second message, the second message being used to request performing a data transmission in the RRC_INACTIVE state; receiving a target signaling, the target signaling being used to determine that the second message is successfully transmitted;
wherein the first message indicates entering or maintaining the RRC_INACTIVE state; the target signaling is scrambled by the first RNTI; the first condition set includes: the first timer is running; the first random access procedure is initiated after the target signaling; when the Absolute Timing Advance Command MAC CE is received, the first inactive procedure is ongoing.

5. The first node according to claim 4, comprising:
the first processor, receiving a first RAR (Random Access Response) in a second random access procedure; transmitting a third MAC PDU according to the first RAR, the third MAC PDU comprising at least a second C-RNTI MAC CE, the second C-RNTI MAC CE comprising the first RNTI; as a response to the third MAC PDU being transmitted, receiving a second signaling; as a response to the first RAR being received, starting or restarting the second timer; as a response to a contention resolution for the second random access procedure being considered successfully, stopping the second timer, and starting or restarting the first timer;
wherein the second signaling is scrambled by the first RNTI; the second random access procedure is initiated after the target signaling; a contention solution for the second random access procedure is considered successful, the first inactive procedure is ongoing.

6. The first node according to any of claims 1-5, wherein the behavior of determining starting or restarting a first timer or second timer according to whether a first inactive procedure is ongoing includes: first starting or restarting the second timer, then determining whether to stop the second timer and starting or restarting the first timer according to whether the first inactive procedure is ongoing.

7. A second node for wireless communications, comprising:
a second transmitter, transmitting an Absolute Timing Advance Command MAC CE in a first random access procedure;
wherein as a response to the Absolute Timing Advance Command MAC CE being received, a receiver of the Absolute Timing Advance Command MAC CE determines starting or restarting a first timer or a second timer according to whether at least a first inactive procedure is ongoing; the behavior of a receiver of the Absolute Timing Advance Command MAC CE determines starting or restarting a first timer or a second timer according to whether at least a first inactive procedure is ongoing includes: if the first inactive procedure is ongoing, a receiver of the Absolute Timing Advance Command MAC CE starts or restarts the first timer; if the first inactive procedure is not ongoing, a receiver of the Absolute Timing Advance Command MAC CE starts or restarts the second timer; both the first timer and the second timer are used to maintain uplink time alignment; the first timer and the second timer are different.

8. A method in a first node for wireless communications, comprising:
receiving an Absolute Timing Advance Command MAC CE in a first random access procedure; as a response to the Absolute Timing Advance Command MAC CE being received, determining starting or restarting a first timer or a second timer according to whether at least a first inactive procedure is ongoing;
wherein the behavior of determining starting or restarting a first timer or second timer according to at least whether a first inactive procedure is ongoing includes: if the first inactive procedure is ongoing, starting or restarting the first timer; if the first inactive procedure is not ongoing, starting or restarting the second timer; both the first timer and the second timer are used to maintain uplink time alignment; the first timer and the second timer are different.

9. A method in a second node for wireless communications, comprising:
transmitting an Absolute Timing Advance Command MAC CE in a first random access procedure;
wherein as a response to the Absolute Timing Advance Command MAC CE being received, a receiver of the Absolute Timing Advance Command MAC CE determines starting or restarting a first timer or a second timer according to whether at least a first inactive procedure is ongoing; the behavior of a receiver of the Absolute Timing Advance Command MAC CE determines starting or restarting a first timer or a second timer according to whether at least a first inactive procedure is ongoing includes: if the first inactive procedure is ongoing, a receiver of the Absolute Timing Advance Command MAC CE starts or restarts the first timer; if the first inactive procedure is not ongoing, a receiver of the Absolute Timing Advance Command MAC CE starts or restarts the second timer; both the first timer and the second timer are used to maintain uplink time alignment; the first timer and the second timer are different.
